# EUROPÄISCHE PATENTSCHRIFT

(11) **EP 2 007 776 B1**
(45) Veröffentlichungstag und Bekanntmachung des Hinweises auf die Patenterteilung: **27.10.2010**
(21) Anmeldenummer: 07727436.3
(22) Anmeldetag: 28.03.2007
(51) Int. Cl.: C07F 7/18, C07F 7/08, C07F 15/00, C07F 17/02

(54) **HYDROSILYLIERUNGSVERFAHREN IN GEGENWART VON RUTHENIUM-KATALYSATOREN**
HYDROSILYLATION PROCESS IN THE PRESENCE OF RUTHENIUM CATALYZERS
PROCÉDÉ D'HYDROSILYLATION EN PRÉSENCE DE CATALYSEURS DU RUTHÉNIUM

(30) Priorität: 13.04.2006 DE 102006017588
(43) Veröffentlichungstag der Anmeldung: 31.12.2008
(73) Patentinhaber: Wacker Chemie AG, 81737 München (DE)
(72) Erfinder: HOFMANN, Marco, 84489 Burghausen (DE); EBERLE, Hans-Jürgen, 81477 München (DE); WEIS, Johann, 82054 Sauerlach (DE)
(74) Vertreter: Fränkel, Robert
(86) Internationale Anmeldenummer: PCT/EP2007/052964
(87) Internationale Veröffentlichungsnummer: WO 2007/118773

(56) Entgegenhaltungen:
- WO-A-03/042135
- WO-A-2006/136695
- JP-A- 6 157 555
- US-A1- 2004 072 680

## Beschreibung

Die Erfindung betrifft die neuartige Verwendung von Ruthenium-Katalysatoren in der übergangsmetall-katalysierten Hydrosilylierung bzw. ein Hydrosilylierungsverfahren in Gegenwart von neutralen Ruthenium-Komplexen als Katalysatoren, wobei diese mindestens zwei Kohlenstoff-π-gebundene, ungesättigte Liganden am Ruthenium aufweisen.

Die Addition von Si-H-funktionellen Verbindungen an Verbindungen mit aliphatischen ungesättigten Bindungen, insbesondere C=C-Doppelbindungen (Hydrosilylierung) ist bereits lange bekannt.

Über die Hydrosilylierung können Si-haltige organische Verbindungen, Organosilane und Organopolysiloxane hergestellt werden. Sie wird insbesondere in der additionsvernetzenden Aushärtung von Organopolysiloxanen in der Silikonindustrie verwendet, beispielsweise zur Herstellung von Elastomeren, Abformmassen in der Dentalindustrie oder von anti-adhäsiven Beschichtungen in der Papier- und Folienindustrie.

Als Katalysatoren für die Hydrosilylierungsreaktion werden am häufigsten Platin und seine Verbindungen verwendet, wobei das Platin entweder in metallischer Form, als auf einem anorganischen Träger fixiertes Metall, als Platinsalz oder in Form eines gegebenenfalls löslichen Platinkomplexes eingesetzt wird.

Bis heute wird für den Großteil der industriell durchgeführten Hydrosilylierungsreaktionen der aus US3715334 und US3775452 bekannte sog. "Karstedt-Katalysator" verwendet, der überwiegend aus einem dimeren Platin-Tetramethyl-divinyl-siloxan-Komplex besteht, beschreibbar durch die Formel [Pt₂(TMDVS)₃] (TMDVS = Tetramethyl-divinyl-disiloxan). Der Karstedt-Katalysator wird ausgehend von Hexachloroplatinsäure H₂PtCl₆ hergestellt, die als alkoholische Lösung ebenfalls häufig als Hydrosilylierungskatalysator eingesetzt wird.

Da Platin eines der teuersten Edelmetalle darstellt, gab es häufig schon Bestrebungen, andere Metalle und deren Verbindungen als Katalysatoren in der Hydrosilylierung einzusetzen. So ist aus dem Stand der Technik bereits die Verwendung der anderen Platingruppenmetalle Pd, Rh, Ir, Ru in der Hydrosilylierung bekannt. Diese wurden als Alternativen zu Pt bisher jedoch vor allem als Katalysatoren zur Verwendung bei speziellen Substraten beschrieben.

So werden beispielsweise in US 2004/0092759 A1 sowie in US 5559264 Ru-Katalysatoren, wie z. B. RuCl₃, RuBr₃, Ru(acac)₃, Ru/C, Ru₃(CO)₁₂, [RuCl₂(CO)₃]₂, [Ru(COD)Cl₂]ₙ (COD = 1,5-Cyclooctadien), Ru(PPh₃)₂(CO)₂Cl₂ und Ru(PPh₃)₃(CO)H₂ für die Hydrosilylierung von HSi(R)ₓ(OR)₃₋ₓ (x = 0-2) mit einem olefinischen Halogenid, wie Allylchlorid beschrieben.

In EP 0403706 A2 ist die Verwendung von Ru-Komplexen mit mindestens einem tertiären Phosphin-Liganden, wie beispielsweise Ru(CO)₃(PPh₃)₂, RuCl₂(PPh₃)₂, Ru(H)(Cl)(PPh₃)₃, Ru(PPh₃)₄H₂ und Ru(CH₂=CH₂)(PPh₃)₃ als Katalysatoren zur Hydrosilylierung von Allylaminen mit SiH-funktionellen Silanen beschrieben.

US 5248802 beschreibt die Hydrosilylierung von Trichlorsilan mit olefinischen Nitrilen, wie z. B. Acrylnitril in Gegenwart von Ru-Halogen- oder Ru-Phosphin-Verbindungen, wie RuCl₃, RuBr₃, RuI₃, Ru(CO)₃(PPh₃)₂, RuCl₂(PPh₃)₃, Ru(H)(Cl)(PPh₃)₃, RuH₂(PPh₃)₄, Ru(CH₂=CH₂)(PPh₃)₃ und RuCl₂(CO)₂(PPh₃)₂.

In DE 2810032 A1 ist schließlich die Hydrosilylierung von Dichlorsilan mit Olefinen in Gegenwart von Ru-Komplexen, wie beispielsweise RuCl₂(PPh₃)₃, Ru(H)(Cl)(PPh₃)₃, RuH₃(PPh₃)₃[Si(OMe)₃], RuH₃(PPh₃)₃[Si(OMe)₂Ph] und RuH₂(PPh₃)₄ beschrieben.

Aber auch die Verwendung anderer Verbindungen mit Übergangsmetallen, wie Ni, Co oder Fe als Katalysatoren für Hydrosilylierungen ist bereits beschrieben.

In der Regel sind diese Katalysatoren aber den gängigen Pt-Katalysatoren bezüglich der Reaktivität und Selektivität deutlich unterlegen, insbesondere für die Vernetzung von Polysiloxanen über eine Hydrosilylierungsreaktion reicht die Geschwindigkeit und Selektivität der bisher für die Hydrosilylierung beschriebenen Nicht-Pt-Katalysatoren in der Regel nicht aus. Auch aus ökonomischer Sicht sind diese Systeme meist nicht zwangsläufig vorteilhaft, da höhere Katalysatorkonzentrationen bei den Nicht-Platin Katalysatoren angewendet werden müssen, bzw. im Falle von Rhodium mit noch höheren Kosten als bei Platin zu rechnen ist.

Es bestand somit die Aufgabe, einen alternativen Hydrosilylierungskatalysator bereit zu stellen. Insbesondere bestand die Aufgabe, einen Katalysator bereit zu stellen, der sowohl aus ökonomischer Sicht als auch bezüglich der Reaktivität und Selektivität den bisher im Stand der Technik beschriebenen Nicht-Platin-Hydrosilylierungskatalysatoren überlegen ist und somit eine Alternative zu den aus dem Stand der Technik bekannten Pt-Katalysatoren darstellt.

Überraschenderweise wurde gefunden, dass diese Aufgabe durch eine bestimmte Klasse von neutralen Ruthenium-Komplexverbindungen gelöst werden kann.

Gegenstand der Erfindung ist die Verwendung von Ruthenium-Verbindungen, die mindestens zwei unabhängige Kohlenstoff-π-gebundene Liganden aufweisen, wobei mindestens einer dieser Liganden ausgewählt wird aus der Gruppe enthaltend η⁶-gebundene Arenliganden, η⁶-gebundene Trienliganden, η⁴-gebundene 1,5-Cyclooctadienliganden und η⁴-gebundene 1,3,5-Cyclooctatrienliganden als Hydrosilylierungskatalysatoren.

Unter η⁶-gebundene Trienliganden sind dabei konjugierte oder nicht konjugierte - vorzugsweise konjugierte - Triolefine zu verstehen, die mit Ihren Doppelbindungen π-Komplexe mit dem zentralen Ru-Atom ausbilden.

Obwohl Ruthenium-Verbindungen dieser Klasse bereits aus dem Stand der Technik bekannt sind und deren Einsatz als Katalysatoren beschrieben wurde, ist deren Verwendung als Hydrosilylierungskatalysatoren bislang nicht berichtet worden. So berichten Hori et al. in Bull. Chem. Soc. Jpn. (1988), 61, 3011 ff., dass Ruthenium-Verbindungen dieser Klasse als Katalysatoren bei der Umsetzung von Olefinen mit SiH-funktionellen Silanen zur Herstellung von Vinyl- bzw. Allyl-Silanen sowie zur Olefin-Hydrierung eingesetzt werden können, nicht jedoch über deren Verwendung als Hydrosilylierungskatalysatoren. Es ist somit vollkommen überraschend, dass sich die erfindungsgemäß einsetzbaren Verbindungen als effektive Hydrosilylierungskatalysatoren erwiesen haben, insbesondere in Verbindung mit Sauerstoff-substituierten Si-Verbindungen als Substraten, vorzugsweise Sauerstoff-substituierten Si-H-funktionellen und/oder Sauerstoff-substituierten Si-Vinyl-funktionellen Verbindungen, wie beispielsweise Si-H- bzw. Si-Vinyl-funktionellen Alkoxysilanen und/oder Si-H- bzw. Si-Vinyl-funktionellen Siloxan-Verbindungen, ganz besonders bevorzugt bei der Vernetzung von Polysiloxanen.

Ein weiterer Gegenstand der Erfindung ist ein Verfahren zur Hydrosilylierung (Hydrosilylierungsverfahren) in Gegenwart eines Ruthenium-Katalysators, **dadurch gekennzeichnet, dass** der Ruthenium-Katalysator mindestens zwei unabhängige Kohlenstoff-π-gebundene Liganden aufweist, wobei mindestens einer dieser Liganden ausgewählt wird aus der Gruppe enthaltend η⁶-gebundene Arenliganden, η⁶-gebundene Trienliganden, η⁴-gebundene 1,5-Cyclooctadienliganden und η⁴-gebundene 1,3,5-Cyclooctatrienliganden.

Kennzeichnendes Merkmal der für die Hydrosilylierung neu eingesetzten Katalysatoren aus der Gruppe der Ruthenium-Olefin-Komplexe ist, dass deren Ligandensphäre mindestens zwei unabhängige Kohlenstoff-π-gebundene (olefinische), ungesättigte Liganden am Ruthenium aufweist, von denen mindestens einer ein η⁶-gebundener Aren- oder Trienligand oder ein η⁴-gebundener 1,5-Cyclooctadien- oder 1,3,5-Cyclooctatrienligand ist.

Das Rutheniumzentrum kann in diesen Komplexen prinzipiell in allen für Ruthenium-Organometall-Komplexen gängigen Oxidationsstufen vorliegen, insbesondere in den Oxidationsstufen 0, +II, +III, +IV. Bevorzugt sind Komplexe mit den Oxidationsstufen 0 und +II des Rutheniums.

Die Ruthenium (Ru)-Verbindungen liegen in der Regel als 18-Elektronen-Komplexe vor und die Verbindungen sind in der Regel neutral.

Von den π-gebundenen Liganden ist in der Regel mindestens einer derart labil gebunden, dass der Hydrosilylierungs-Katalysecyclus unter Verdrängung dieses Liganden oder einer seiner Koordinationsstellen schnell gestartet werden kann und somit in den meisten Fällen nur sehr kurze Induktionsperioden vorliegen. Der oder die anderen π-gebundenen Liganden dienen gegebenenfalls der Stabilisierung des elektronisch ungesättigten Ru-Fragments und können insbesondere im Hinblick auf eine gute Kompatibilität mit den eingesetzten Substraten, insbesondere im Hinblick auf die Aspekte Löslichkeit und Mischbarkeit hin, ausgewählt bzw. optimiert werden.

Die Verwendung der erfindungsgemäßen Verbindungen in der Hydrosilylierung als Katalysatoren zeichnet sich insbesondere dadurch aus, dass es sich um sehr aktive Katalysatoren handelt, die dennoch frei von Platin sind. Folgende Vorteile sind dabei insbesondere hervorzuheben:
- hohe Aktivität bei gleichzeitig moderaten notwendigen Katalysatorkonzentrationen
- Die Verbindungen sind in der Regel ganz oder zumindest teilweise in zu hydrosilylierende Polysiloxane einmischbar.
- Die Vernetzung von Polysiloxanen ist sowohl in einer Masse als auch in dünnen Schichten möglich.
- in der Regel bereits hohe katalytische Aktivität auch schon bei Raumtemperatur

Die Synthese der erfindungsgemäßen Ru-Komplexe ist dem Fachmann aus dem Stand der Technik grundsätzlich bekannt und für grundlegende Vertreter dieser Verbindungsklasse beschrieben (beispielsweise in Science of Synthesis, 2001, Georg Thieme Verlag, Stuttgart, New York, Band 1, S. 931 - 972).

Mögliche Ausführungsformen der erfindungsgemäßen Katalysatoren können ausgewählt werden aus der Gruppe enthaltend
(a) Ru(0)-Komplexe mit η⁶-gebundenem Aren- oder Trienliganden und mindestens einem weiteren Kohlenstoff-π-gebundenen Liganden;
(b) Ru(0)-Komplexe mit η⁴-gebundenem 1,5-Cyclooctadien- oder 1,3,5-Cyclooctatrienliganden und mindestens einem weiteren Kohlenstoff-π-gebundenen Liganden.

In der Klasse der Ru(0)-Komplexe mit η⁶-gebundenem Aren- oder Trienliganden und mindestens einem weiteren Kohlenstoff-πgebundenen Liganden können mögliche Ausführungsformen unter den folgenden Typen ausgewählt werden:

### ○ Verbindungen der allgemeinen Formel (1)

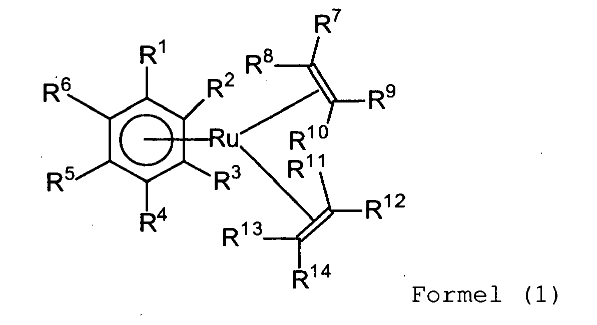

wobei R¹ bis R⁶ unabhängig voneinander ausgewählt werden aus der Gruppe enthaltend Wasserstoff (H); Alkyl; Aryl; Halogen; OR', wobei R' wiederum ausgewählt wird aus der Gruppe enthaltend Wasserstoff (H), Alkyl und Aryl; CO₂R", wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl, mit der Maßgabe, dass zwei benachbarte Reste R¹ bis R⁶ optional einen weiteren Ring bilden können und so beispielsweise einen Naphthyl-Rest bilden; und
R⁷ bis R¹⁴ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO und C(O)R'", wobei '" wiederum ausgewählt wird aus der Gruppe enthaltend Alkyl und Aryl, mit der Maßgabe, dass optional Reste aus R⁷ bis R¹⁰ und aus R¹¹ bis R¹⁴ - mit oder ohne zusätzlichem Spacer - miteinander verbunden sein können und so insgesamt ein mehrzähniger, acyclischer oder cyclischer Ligand gebildet wird, beispielsweise 1,3-Cyclohexadien oder 1,5-Cyclooctadien.

Konkrete Ausführungsformen für Verbindungen der allgemeinen Formel (1) sind:

(η⁶-C₆H₆)Ru(η⁴-C₆H₈)

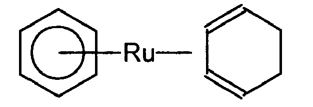

Lit.: Chem. Commun. 1977, 132 - 133. J. Chem. Soc., Dalton Trans. 1980, 1961. Organometallics 2000, 19, 5471 - 5476.

(η⁶-C₆Me₆)Ru(η⁴-C₆H₆)

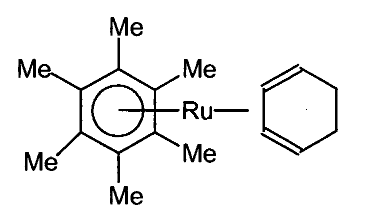

Lit.: Inorg. Synth. 1982, 21, 74

(η⁶-C₆Me₆)Ru(η²-C₂H₄)₂

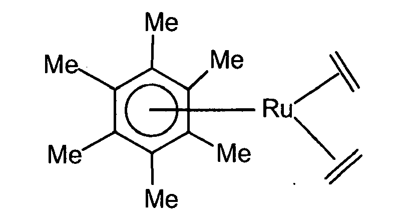

Lit.: Inorg. Synth. 1982, 21, 74

(η⁶-C₁₀H₈)Ru(η⁴-COD) (COD = 1, 5-Cyclooctadien)

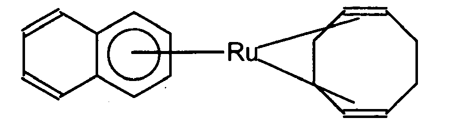

Lit.: J. Chem. Soc., Dalton Trans. 1982, 1019, J. Chem. Soc., Dalton Trans. 1984, 2255

(η⁶-C₆H₅Cl)Ru(COD) (COD = 1,5-Cyclooctadien)

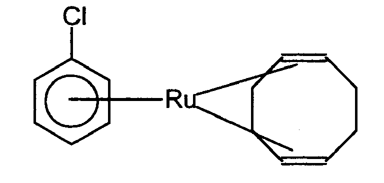

Lit.: J. Chem. Soc., Dalton Trans. 1984, 2255

(η⁶-Cymen)Ru(COD) (COD = 1,5-Cyclooctadien)

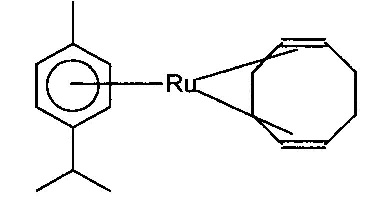

Lit.: Organometallics 2003, 22; 586 - 593

(η⁶-Toluen)Ru(dmfm)₂ (dmfm = dimethylfumarat)

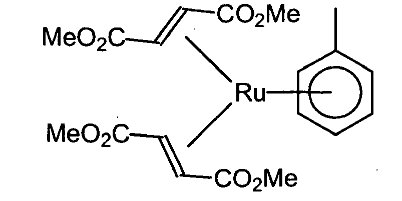

Lit.: Organometallics 2003, 22, 1863 - 1867

### ○ Verbindungen der allgemeinen Formel (2)

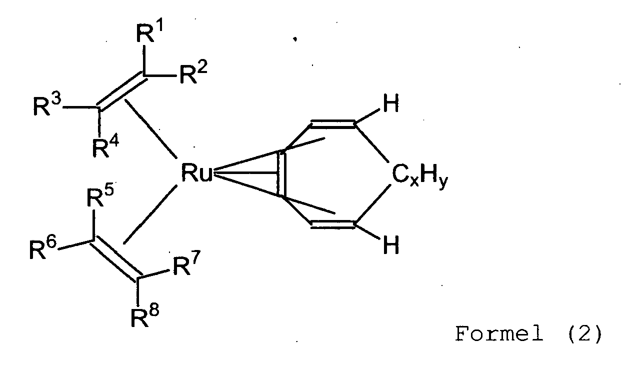

wobei R¹ bis R⁸ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO; C(O)R"', wobei R"' hier wiederum ausgewählt wird aus der Gruppe enthaltend Alkyl, Aryl und NR₂, wobei R wiederum ausgewählt wird aus Wasserstoff (H) und Alkyl, mit der Maßgabe, dass optional Reste aus R¹ bis R⁴ und R⁵ bis R⁸ - mit oder ohne zusätzlichem Spacer - miteinander verbunden sein können und so insgesamt ein mehrzähniger, acyclischer oder cyclischer Ligand gebildet wird, beispielsweise 1,5-Cyclooctadien oder Norbornadien; und
x = 1 und y = 2 (entsprechend Cycloheptatrien);
x = 2 und y = 2 (entsprechend Cyclooctatetraen); und
x = 2 und y = 4 (entsprechend Cyclooctatrien) sein kann.

Konkrete Ausführungsformen für Verbindungen der allgemeinen Formel (2) sind:

Ru(η⁴-COD)(η⁶-COT) (COD = 1,5-Cyclooctadien, COT = 1,3,5-Cyclooctatrien)

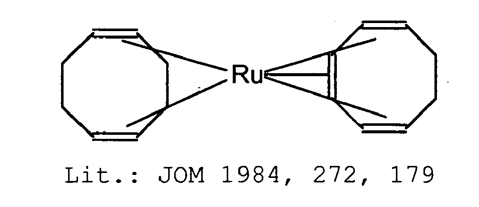

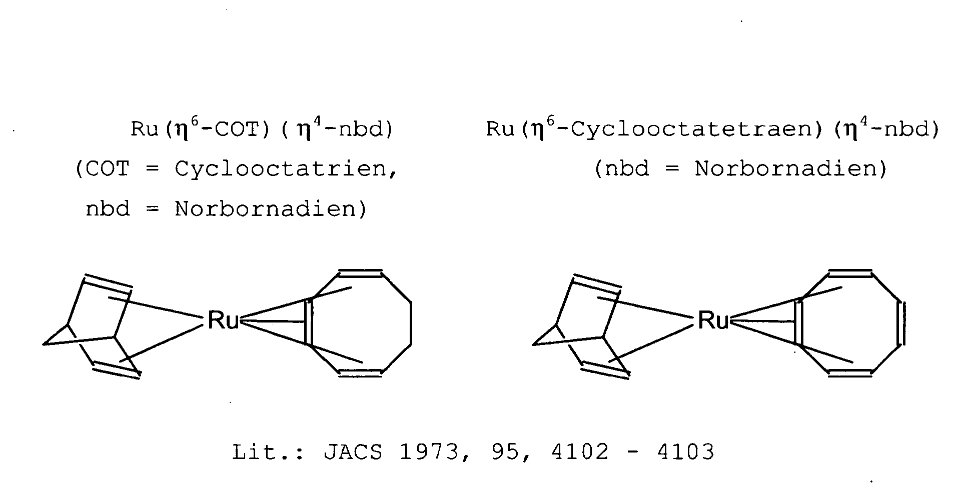

Ru(η⁶-COT)(η²-dmfm)₂ (COT = cyclooctatrien, dmfm = dimethylfumarat)

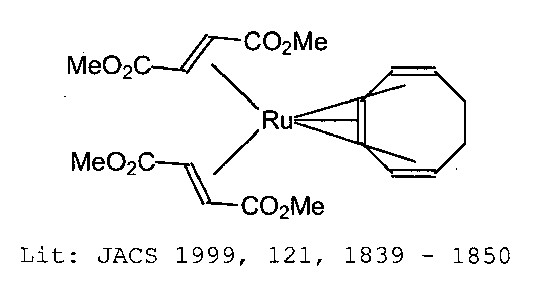

Ru(η⁶-COT)(η⁴-*p*-benzochinon) (COT = Cyclooctatrien)

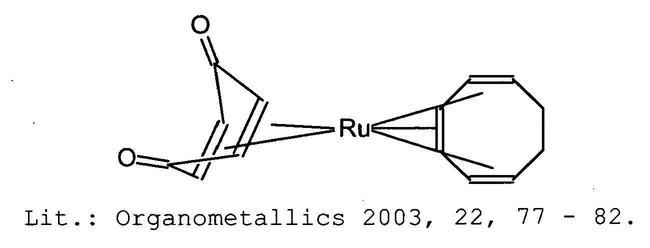

### ○ Verbindungen der allgemeinen Formel (3)

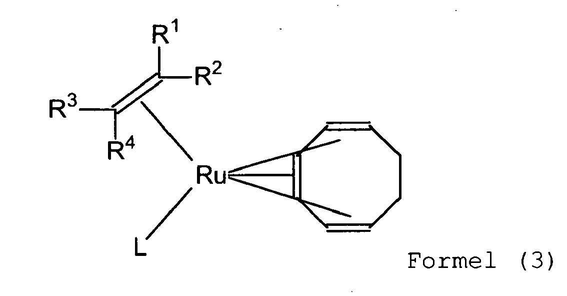

wobei R¹ bis R⁴ unabhängig voneinander ausgewählt werden aus der Gruppe enthaltend Wasserstoff (H); Alkyl; Aryl; Halogen; Silyl; Siloxy; CN; CO₂R", wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl; und
L ausgewählt wird aus der Gruppe enthaltend PR"'₃ und P(OR"')₃, wobei R"' hier wiederum ausgewählt wird aus Alkyl und Aryl; NR₂H, wobei R hier wiederum ausgewählt wird aus Wasserstoff (H), Alkyl und Alkylaryl; Morpholin und Pyridin.

Konkrete Ausführungsformen für Verbindungen der allgemeinen Formel (3) sind:

Ru(η⁶-COT)(py)(η²-dmfm) (COT = cyclooctatrien, py = pyridin, dmfm = dimethylfumarat)

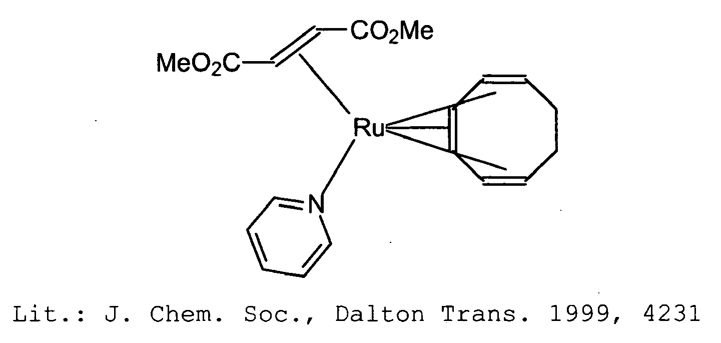

Ru(η⁶-COT)(PPh₃)(η²-dmfm) (COT = cyclooctatrien, dmfm = dimethylfumarat)

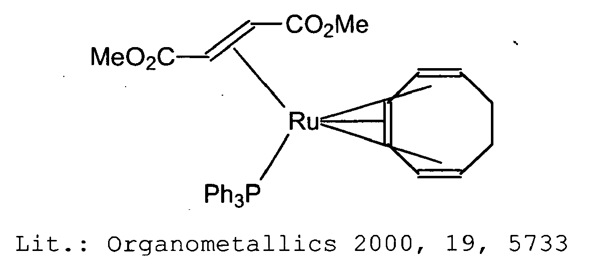

In der Klasse der Ru(0)-Komplexe mit η⁴-gebundenem 1,5-Cyclooctadien- oder 1,3,5-Cyclooctatrienliganden und mindestens einem weiteren Kohlenstoff-π-gebundenen Liganden können mögliche Ausführungsformen unter den folgenden Typen ausgewählt werden:

### ○ Verbindungen der allgemeinen Formel (4)

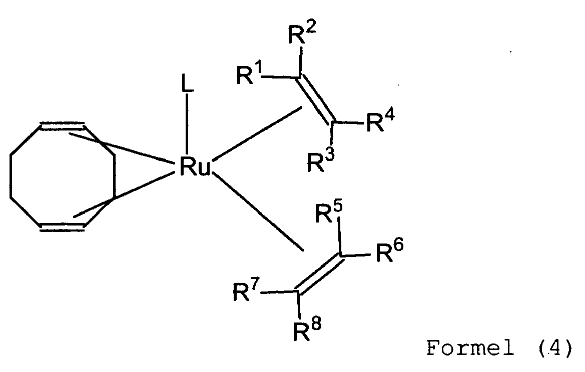

wobei R¹ bis R⁸ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl, mit der Maßgabe, dass optional Reste aus R¹ bis R⁴ und R⁵ bis R⁸ - mit oder ohne zusätzlichem Spacer - miteinander verbunden sein können und so insgesamt ein mehrzähniger, acyclischer oder cyclischer Ligand gebildet wird, beispielsweise 1,3,5-Cyclooctatrien; und
L ausgewählt wird aus der Gruppe enthaltend CO; CNR"', wobei R"' wiederum ausgewählt wird aus der Gruppe enthaltend Alkyl und Aryl; PR"'₃ und P(OR'")₃, wobei R"' wiederum ausgewählt wird aus der Gruppe enthaltend Alkyl und Aryl; Liganden enthaltend N-Donatoren, beispielsweise Acetonitril, Benzonitril, Pyridin; Liganden enthaltend S-Donatoren, beispielsweise Dimethylsulfoxid; Liganden enthaltend O-Donatoren, beispielsweise Tetrahydrofuran.

Konkrete Ausführungsformen für Verbindungen der allgemeinen Formel (4) sind:

Ru(η⁴-COD)(η⁴-COT)[P(OMe)₃] (COD = cyclooctadien, COT = cyclooctatrien)

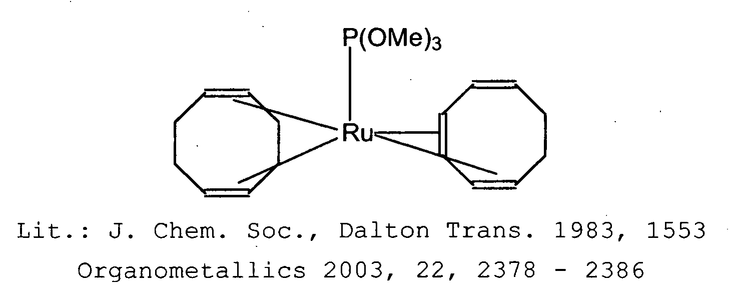

### ○ Verbindungen der allgemeinen Formel (5)

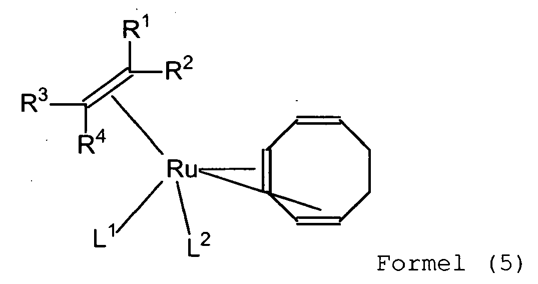

wobei
R¹ bis R⁴ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl; und
L¹ und L² unabhängig voneinander ausgewählt werden aus CO; CNR"', wobei R"' wiederum ausgewählt wird aus der Gruppe enthaltend Alkyl und Aryl; PR"'₃ und P(OR'")₃, wobei R"' wiederum ausgewählt wird aus der Gruppe enthaltend Alkyl und Aryl, Liganden enthaltend N-Donatoren, beispielsweise Acetonitril, Benzonitril, Pyridin; Liganden enthaltend S-Donatoren, beispielsweise Dimethylsulfoxid; Liganden enthaltend O-Donatoren, beispielsweise Tetrahydrofuran, mit der Maßgabe, dass L¹ und L² optional auch mit einander verknüpft sein und einen Ring bilden können.

Konkrete Ausführungsformen für Verbindungen der allgemeinen Formel (5) sind:

Ru(η⁴-COT)(dmfm)(η²-dppm) (COT = Cyclooctatrien, dmfm = Dimethylfumarat, dppm = Bis-(diphenylphosphino)methan)

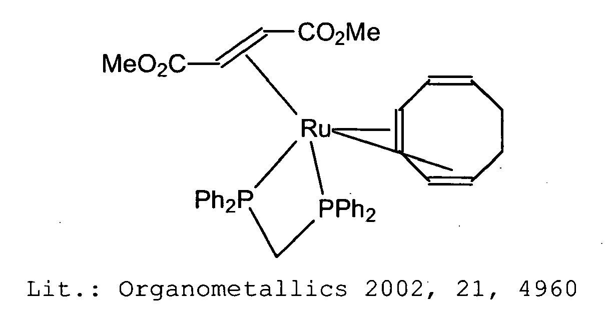

### ○ Verbindungen der allgemeinen Formel (6)

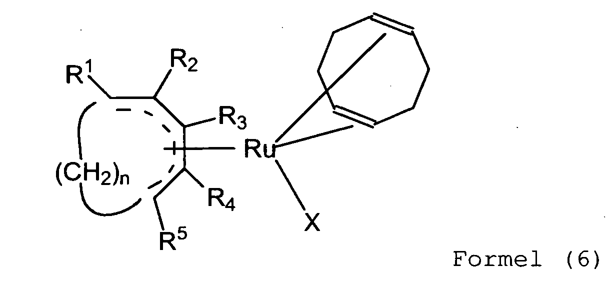

wobei R¹ bis R⁵ unabhängig voneinander ausgewählt werden aus der Gruppe enthaltend Wasserstoff (H); Alkyl; Aryl; und
die gestrichelte Linie in der allgemeinen Formel (6) für eine oder mehrere konjugierte oder nicht konjugierte Doppelbindungen steht; und
n für 0, 2 oder 3 steht; und
X für einen beliebigen einwertigen anionischen Liganden steht, insbesondere ausgewählt aus der Gruppe enthaltend Halogenid und Acetat.

Konkrete Ausführungsformen für Verbindungen der allgemeinen Formel (6) sind:

Ru(η⁴-COD)(C₅Me₅)Cl (COD = Cyclooctadien)

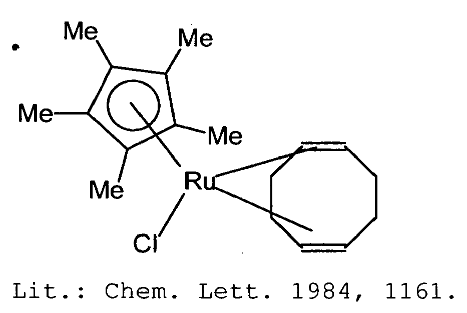

Ru(η⁴-COD)(η⁵-C₈H₁₁)(OAc) (COD = Cyclooctadien)

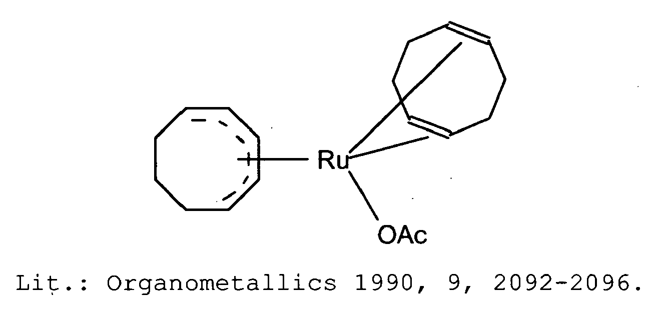

### ○ Verbindungen der allgemeinen Formel (7)

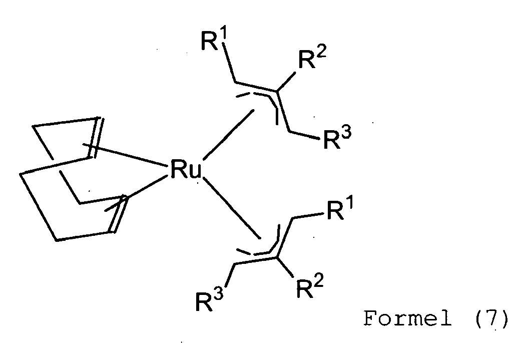

wobei R¹ bis R³ unabhängig voneinander ausgewählt werden aus der Gruppe enthaltend Wasserstoff (H) und Alkyl.

Konkrete Ausführungsformen für Verbindungen der allgemeinen Formel (7) sind:

Ru(η⁴-COD)(η³-methallyl)₂ (COD = cyclooctadien)

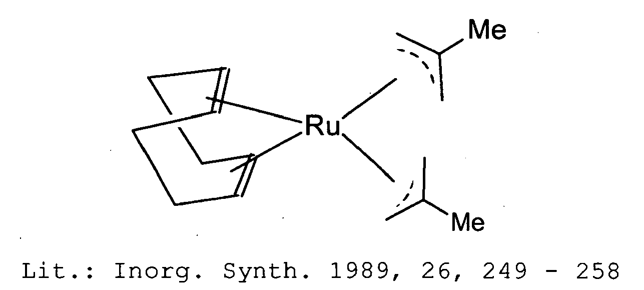

Die erfindungsgemäßen Katalysatoren, insbesondere solche der allgemeinen Formeln (1) bis (7) und der genannten konkreten Ausführungsformen, werden im allgemeinen in einer Menge eingesetzt, so dass sich ein Ru-Gehalt von 10 - 1000 ppm, bevorzugt 50 - 500 ppm, bezogen auf die Gesamtmasse der reagierenden Substrate, ergibt.

Die Hydrosilylierungsreaktionen unter Verwendung der erfindungsgemäßen Katalysatoren erfolgen im allgemeinen bei Temperaturen zwischen Raumtemperatur, insbesondere 20°C, und 200°C, bevorzugt zwischen 50°C und 120°C, und einem Druck von 900 bis 1100 hPa. Es können aber auch höhere oder niedrigere Temperaturen und Drücke angewendet werden.

Bei der Vernetzung von Polysiloxanen ist es vorteilhaft, den Katalysator vor der Reaktion im vinylfunktionellen Polysiloxan so gut wie möglich zu homogenisieren. Dies kann durch externe Hilfsmittel erfolgen, wie beispielsweise Ultraschall-Behandlung in einem Ultraschallbad, oder durch Lösen der erfindungsgemäßen Ru-Katalysatoren in einem geeigneten, vorzugsweise niedrig siedenden, insbesondere unter 100°C siedendem, organischen Lösungsmittel, wie beispielsweise Dichlormethan oder Tetrahydrofuran, der anschließenden Einmischung in das vinylfunktionelle Polysiloxan und anschließendem Abziehen des Lösungsmittels im Vakuum.

Geeignet sind auch sehr geringe Mengen eines höher siedenden, insbesondere über 100°C siedenden, organischen Lösungsmittels, wie beispielsweise Toluol, oder eines Siloxans, wie beispielsweise Octamethyl-cyclotetrasiloxan (D4), das anschließend im zu vernetzenden Gemisch verbleibt.

Die Hydrosilylierungsreaktionen können entweder an Luft oder unter einer Inertgasatmosphäre (Stickstoff, Argon) durchgeführt werden, bevorzugt ist die Reaktion unter Inertgasatmosphäre.

Das erfindungsgemäße Verfahren bzw. die erfindungsgemäße Verwendung der Ruthenium-Katalysatoren kann allgemein in allen Hydrosilylierungsreaktionen, die dem Fachmann aus dem Stand der Technik bekannt sind und beispielsweise in Walter Noll "Chemie und Technologie der Silicone", Verlag Chemie GmbH, Weinheim/Bergstr. 1968; Bogdan Marciniec, "Comprehensive Handbook on Hydrosilylation", Oxford: Pergamon Press, 1992 beschrieben sind, erfolgen und allgemein in allen aus dem Stand der Technik bekannten hydrosilylierbaren, insbesondere vernetzbaren Zusammensetzungen eingesetzt werden.

Die erfindungsgemäße Verwendung der Katalysatoren bzw. das erfindungsgemäße Verfahren ist sowohl für die Synthese niedermolekularer Verbindungen als auch für das Härten höhermolekularer Verbindungen geeignet, insbesondere von Polymeren mit ungesättigten Gruppen, insbesondere mit Kohlenstoff-Kohlenstoff-Doppelbindungen.

Insbesondere werden solche Hydrosilylierungsreaktionen katalysiert, in denen C=C-funktionelle Polysiloxane mit SiH-funktionellen Polysiloxanen oder C=C-funktionellen Organosilanen mit SiH-funktionellen Organosilanen umgesetzt werden.

Bevorzugt sind vor allem die Umsetzung von vinyl-endständigen Polydimethylsiloxanen mit SiH-funktionellen Polysiloxanen der allgemeinen Formel Me₃SiO-[Si(H)(Me)O]ₓ-SiMe₃, wobei x hier für eine Zahl von 1 bis 500 steht, insbesondere für 1 bis 100 sowie von Si-Vinyl-funktionellen Organosilanen mit Si-H-funktionellen Organosilanen.

Als konkrete Beispiele für Si-vinyl-funktionelle Organosilane, die nach dem erfindungsgemäßen Verfahren bzw. unter der erfindungsgemäßen Verwendung der Katalysatoren hydrosilyliert werden können, seien genannt Vinyltrimethyl-silan, Vinyltriethoxysilan, Vinyl-methyl-diethoxysilan, Vinyl-methyldimethoxysilan, Vinyltrichlorsilan.

Als konkrete Beispiele für SiH-funktionelle Organosilane seien genannt HSi(OR')₃, wobei R' hier für einen Alkyl-Rest steht, HSi(Me)₃₋ₓClₓ, wobei x hier für eine Zahl von 1 bis 3 steht und HSiR"₃, wobei R" hier für einen Alkyl oder Aryl-Rest steht.

Gauz allgemein sollen die hydrolysierbaren Zusammen. Sekingen folgend Komponenten enthalten:
(A) eine Verbindung mit wenigstens einer aliphatisch ungesättigten Kohlenstoff-Kohlenstoff-Bindung,
(B) eine Verbindung mit wenigstens einer Silizium-Wasserstoff-Bindung und
(D) eine Ruthenium-Verbindung, die dadurch gekennzeichnet ist, dass deren Ligandensphäre mindestens zwei unabhängige

Kohlenstoff-π-gebundene (ungesättigte) Liganden aufweist, wobei mindestens einer dieser Liganden ausgewählt wird aus der Gruppe enthaltend η⁶-gebundene Arenliganden, η⁶-gebundene Trienliganden, η⁴-gebundene 1,5-Cyclooctadienliganden und η⁴-gebundene 1,3,5-Cyclooctatrienliganden.

In einer bevorzugten Ausführungsform der hydrosilylierbaren Zusammensetzungen handelt es sich um Polyorganosiloxanmassen, enthaltend
(A) Polyorganosiloxane, die Reste mit aliphatischen Kohlenstoff-Kohlenstoff-Mehrfachbindungen aufweisen,
(B) Polyorganosiloxane mit Si-gebundenen Wasserstoffatomen oder anstelle von (A) und (B)
(C) Polyorganosiloxane, die SiC-gebundene Reste mit aliphatischen Kohlenstoff-Kohlenstoff-Mehrfachbindungen und Si-gebundene Wasserstoffatome aufweisen, und
(D) eine Ruthenium-Verbindung, die dadurch gekennzeichnet ist, dass deren Ligandensphäre mindestens zwei unabhängige Kohlenstoff-π-gebundene (ungesättigte) Liganden aufweist, wobei mindestens einer dieser Liganden ausgewählt wird aus der Gruppe enthaltend η⁶-gebundene Arenliganden, η⁶-gebundene Trienliganden, η⁴-gebundene 1,5-Cyclooctadienliganden und η⁴-gebundene 1,3,5-Cyclooctatrienliganden.

Die Ruthenium-Verbindung der Komponente (D) fungiert dabei jeweils als Hydrosilylierungskatalysator (Ruthenium-Katalysator). Vorzugsweise werden Verbindungen der allgemeinen Formel (1) bis (7) eingesetzt, insbesondere eine oder mehrere der oben genannten konkreten Ausführungsformen.

Hydrosilylierbare Zusammensetzungen bedeutet dabei insbesondere vernetzbare Zusammensetzungen.

Die zu den hydrosilylierbaren Zusammensetzungen beschriebenen Komponenten (A), (B) bzw. (C) entsprechen den in dem erfindungsgemäßen Verfahren umzusetzenden Verbindungen (Reaktanden). Sowohl den erfindungsgemäßen Zusammensetzungen wie auch dem erfindungsgemäßen Verfahren und der Verwendung liegen die selben erfindungsgemäßen Ruthenium-Katalysatoren zu Grunde.

Das erfindungsgemäße Verfahren zur Hydrosilylierung wird durch Energiezufuhr, insbesondere durch Wärmezufuhr durchgeführt. Gleiches gilt für die erfindungsgemäßen hydrosilylierbaren Zusammensetzungen.

Bevorzugt enthalten die erfindungsgemäßen hydrosilylierbaren Zusammensetzungen Verbindungen mit wenigstens einer aliphatisch ungesättigten Kohlenstoff-Kohlenstoff-Bindung, die ausgewählt werden aus der Gruppe enthaltend Vinyl-funktionelle Organosilane und Vinyl-endständige Polydimethylsiloxane und Verbindungen mit wenigstens einer Silizium-Wasserstoff-Bindung, die ausgewählt werden aus der Gruppe enthaltend SiH-funktionelle Polysiloxane und Si-H-funktionelle Organosilane.

Die Erfindung betrifft ebenfalls Siliconelastomere erhältlich durch Vernetzung der oben beschriebenen erfindungsgemäßen hydrosilylierbaren Zusammensetzungen, insbesondere der beschriebenen Polyorganosiloxanmassen.

Die Erfindung betrifft ebenfalls Beschichtungen, insbesondere anti-adhäsive Beschichtungen, beispielsweise zum Herstellen von Trenn-, Abdeck- und Mitläuferpapieren erhältlich durch Vernetzung der oben beschriebenen erfindungsgemäßen hydrosilylierbaren Zusammensetzungen, insbesondere der beschriebenen Polyorganosiloxanzusammensetzungen.

Die Erfindung betrifft ebenfalls mit dem erfindungsgemäßen Verfahren hergestellte Polysiloxan- oder Organosilan-Zusammensetzungen, die beispielsweise zum Herstellen von Dentalabdrücken, Klebstoffen, Release-Liner, Flachdichtungen, Dichtungsmittel und Beschichtungen verwendbar sind.

Die in den erfindungsgemäßen Massen eingesetzten Verbindungen (A) und (B) bzw. (C) werden erfindungsgemäß so gewählt, dass eine Vernetzung möglich ist. So weist erfindungsgemäss Verbindung (A) mindestens zwei aliphatisch ungesättigte Reste auf und Siloxan (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist.

Bei der erfindungsgemäß eingesetzten Verbindung (A) kann es sich auch um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln. Beispiele für organische Verbindungen, die in den erfindungsgemäßen Massen als Komponente (A) eingesetzt werden können, sind 1,3,5-Trivinyl-cyclohexan, 2,3-Dimethyl-1,3-butadien, 7-Methyl-3-methylen-1,6-octadien, 2-Methyl-1,3-butadien, 1,5-hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopro-penylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5) und 4,5-Dimethyl-4,5-diethyl-octadien-(1,7), N,N'-Methylen-bis-(acrylsäureamid), 1,1,1-Tris(hydroxy-methyl)-propan-triacrylat, 1,1,1-Tris(hydroxymethyl)-propan-trimethacrylat, Tripropylenglykol-diacrylat, Diallylether, Di-allylamin, Diallylcarbonat, N,N'-Diallylharnstoff, Triallyl-amin, Tris(2-methylallyl)amin, 2,4,6-Triallyloxy-1,3,5-triazin, Triallyl-s-triazin-2,4,6(1H,3H,5H)-trion, Diallylmalonsäureester, Polyethylenglykol Diacrylat, Polyethylenglykol Dimethacrylat, Poly-(propylenglykol)methacrylat.

Vorzugsweise enthalten die erfindungsgemäßen Siliconmassen als Bestandteil (A) jedoch eine aliphatisch ungesättigte Organosiliciumverbindung, wobei alle bisher in additionsvernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der durchschnittlichen allgemeinen Formel (X)

RₐR^{y}_{b}SiO_{(4-a-b)/2} Formel (X)

eingesetzt, wobei hierin
- R: gleich oder verschieden sein kann und einen von aliphatischen Kohlenstoff-Kohlenstoff-Mehrfachbindungen freien, organischen Rest bedeutet,
- R^{y}: gleich oder verschieden sein kann und einen einwertigen, gegebenenfalls substituierten, SiC-gebundenen Kohlenwasserstoffrest mit aliphatischer Kohlenstoff- Kohlenstoff-Mehrfachbindung bedeutet,
- a: 0, 1, 2 oder 3 ist und
- b: 0, 1 oder 2 ist
mit der Maßgabe, dass die Summe a + b kleiner oder gleich 3 ist und im Durchschnitt mindestens 2 Reste R^{y} je Molekül vorliegen.

Beim Rest R in der allgemeinen Formel (X) kann es sich um ein- oder mehrwertige Reste handeln, wobei die mehrwertigen Reste, wie bivalente, trivalente und tetravalente Reste, dann mehrere, wie etwa zwei, drei oder vier Siloxy-Einheiten der allgemeinen Formel (X) miteinander verbinden.

R umfässt insbesondere die einwertigen Reste -F, -Cl, -Br, -OR^{x}, -CN, -SCN, -NCO und SiC-gebundene, gegebenenfalls substituierte Kohlenwasserstoffreste, die mit Sauerstoffatomen oder der Gruppe -C(O)- unterbrochen sein können, sowie zweiwertige, beidseitig gemäß der allgemeinen Formel (X) Si-gebundene Reste. R^{x} steht dabei allgemein für Wasserstoff oder einen einwertigen, gegebenenfalls substituierten Kohlenwasserstoffrest mit 1 bis 20 Kohlenstoffatomen, bevorzugt für Wasserstoff, Alkylreste und Arylreste.

Beispiele für Rest R^{x} sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl, neo-Pentyl-, tert.-Pentylrest, Hexylreste, wie der n-Hexylrest, Heptylreste, wie der n- Heptylrest, Octylreste, wie der n-Octylrest und iso-Octylreste, wie der 2,2,4- Trimethylpentylrest, Nonylreste, wie der n-Nonylrest, Decylreste, wie der n-Decylrest, Cycloalkylreste, wie Cyclopropyl-, Cyclopentyl-, Cyclohexyl-, Cycloheptylreste und Methylcyclohexylreste, ungesättigte Reste, wie der Allyl-, 5-Hexenyl-, 7-Octenyl-, Cyclohexenyl- und Styrylrest, Arylreste, wie Phenylreste, o-,m-,p-Tolylreste, Xylylreste und Ethylphenylreste, Aralkylreste, wie der Benzylrest und der α- und β-Phenylethylrest.

Beispiele für halogenierte Reste R^{x} sind Halogenalkylreste, wie der 3,3,3-Trifluor-n-propylrest, der 2,2,2,2',2',2',-Hexafluorisopropylrest, der Heptafluorisopropylrest und Halogenarylreste, wie der o-,m-, und p-Chlorphenylrest.

Bevorzugt handelt es sich bei R^{x} um Wasserstoff, Alkylreste und Arylreste, wobei Wasserstoff, der Methyl- und der Ethylrest besonders bevorzugt sind.
Falls es sich bei Rest R um SiC-gebundene, substituierte Kohlenwasserstoffreste handelt, sind als Substituenten Halogenatome, phosphorhaltige Reste, Cyanoreste, -OR^{x}, -NR^{x}-, -NR^{x}_{2,} -NR^{x}-C(O)-NR^{x}₂, -C(O)-NR^{x}₂, -C(O)-R^{x}, -C(O)OR^{x}, -SO₂-Ph und -C₆F₅ mit R^{x} gleich der oben genannten Bedeutung und Ph gleich Phenylrest bevorzugt.

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecyl-rest, und Octadecylreste, wie der n-Octadecylrest, Cycloalkylreste, wie Cyclopentyl-, Cyclohexyl-, Cycloheptyl- und Methyl-cyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)ₙ-N(R^{x})C(O)NR^{x}₂, -(CH₂)ₙ-C(O)NR^{x}₂, -(CH₂)ₙ-C(O)R^{x}, -(CH₂)ₙ-C(O)OR^{x}, -(CH₂)ₙ-C(O)NR^{x}₂, -(CH₂)ₙ-C(O)-(CH₂)ₘ-C(O)CH₃, -(CH_{z})ₙ-NR^{x}-(CH_{z})ₘ-NR^{x}₂, -(CH₂)ₙ-O-CO-R^{x}, -(CH₂)ₙ-O-(CH₂)ₘ-CH(OH)-CH₂OH, -(CH₂)ₙ-(OCH₂CH₂)ₘ-OR^{x}, -(CH₂)ₙ-SO₂-Ph und -(CH₂)ₙ-O-C₆F₅, wobei R^{x} eine oben dafür angegebene Bedeutung hat, n und m hier gleiche oder verschiedene ganze Zahlen zwischen 0 und 10 sind und Ph den Phenylrest bezeichnet.

Beispiele für R gleich zweiwertige, beidseitig gemäß der allgemeinen Formel (X) Si-gebundene Reste sind solche, die sich von den voranstehend für Rest R genannten einwertigen Beispielen dadurch ableiten, dass eine zusätzliche Bindung durch Substitution eines Wasserstoffatoms erfolgt. Beispiele für derartige Reste sind -(CH₂)n-, -CH(CH₃)-, -C(CH₃)₂-, -CH(CH₃)-CH₂-, -C₆H₄-, -CH(Ph)-CH₂-, -C(CF₃)₂-, -(CH₂)ₙ-C₆H₄-(CH₂)ₙ-, -(CH₂)ₙ-C₆H₄-C₆H₄-(CH₂)ₙ-, -(CH₂O)ₘ-, -(CH₂CH₂O)ₘ-, -(CH₂)ₙ-Oₓ-C₆H₄-SO₂-C₆H₄-Oₓ-(CH₂)ₙ-, wobei x 0 oder 1 ist, m und n die voranstehend genannte Bedeutung haben sowie Ph gleich Phenylrest ist.

Bevorzugt handelt es sich bei Rest R um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R^{y} kann es sich um beliebige, einer Anlagerungsreaktion (Hydrosilylierung) mit einer SiH-funktionellen Verbindung zugängliche Gruppen handeln.

Falls es sich bei Rest R^{y} um SiC-gebundene, substituierte Kohlenwasserstoffreste handelt, sind als Substituenten Halogenatome, Cyanoreste und -OR^{x} bevorzugt, wobei R^{x} die oben genannte Bedeutung hat.

Bevorzugt handelt es sich bei Rest R^{y} um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,3-Divinyl-tetramethyldisiloxan, handeln, jedoch auch um ein über kettenständige oder endständige Si-gebundene Vinylgruppen verfügendes hochpolymeres Polydimethylsiloxan, z. B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R^{y}R₂SiO_{1/2}, R^{y}RSiO_{2/2} und R₂SiO_{2/2} zusammengesetzt, wobei R und R^{y} die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, R^{y}SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Als Organosiliciumverbindung (B) können alle hydrogenfunktionellen Organosiliciumverbindungen eingesetzt werden, die auch bisher in additionsvernetzbaren Massen eingesetzt worden sind. Als Organopolysiloxane (B), die Si-gebundene Wasserstoffatome aufweisen, werden vorzugsweise lineare, cyclische oder verzweigte Organopolysiloxane aus Einheiten der durchschnittlichen allgemeinen Formel (XI)

R_{c}H_{d}SiO_{(4-c-d)/2} Formel (XI)

eingesetzt, worin hier
- R: gleich oder verschieden sein kann und die oben angegebene Bedeutung hat,
- c: 0, 1, 2 oder 3 ist und
- d: 0, 1 oder 2 ist,
mit der Maßgabe, dass die Summe von c + d kleiner oder gleich 3 ist und im Mittel mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent, bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständige oder endständige SiH-Gruppen verfügendes hochpolymeres Polydimethylsiloxan oder ein SiH-Gruppen aufweisendes Siliconharz. Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane sind vorzugsweise aus Einheiten der Formel R₃SiO_{1/2}, HR₂SiO_{1/2}, HRSiO_{2/2} und R₂SiO_{2/2} zusammengesetzt, wobei R die vorstehend angegebene Bedeutung haben. Verzweigte und netzwerkartige Polysiloxane enthalten zusätzlich trifunktionelle und/oder tetrafunktionelle Einheiten, wobei solche der Formeln RSiO_{3/2}, HSiO_{3/2} und SiO_{4/2} bevorzugt sind. Selbstverständlich können auch Mischungen unterschiedlicher, den Kriterien des Bestandteils (B) genügender Siloxane eingesetzt werden. Insbesondere können die den Bestandteil (B) bildenden Moleküle zusätzlich zu den obligaten SiH-Gruppen ggf. zugleich auch aliphatisch ungesättigte Gruppen enthalten. Besonders bevorzugt ist die Verwendung niedermolekularer SiHfunktioneller Verbindungen, wie Tetrakis(dimethyl-siloxy)silan und Tetramethylcyclotetrasiloxan, sowie höhermolekularer, SiHhaltiger Siloxane, wie Poly(hydrogenmethyl)siloxan und Poly(dimethylhydrogenmethyl)siloxan mit einer Viskosität bei 25°C von 10 bis 10 000 mPa·s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den erfindungsgemäßen vernetzbaren Silicongesamtmassen enthalten, dass das Molverhältnis von SiH-Gruppen zu aliphatisch ungesättigten Gruppen bei 0,1 bis 20, besonders bevorzugt zwischen 1,0 und 5,0, liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die erfindungsgemäßen Massen Organopolysiloxane (C), die aliphatische Kohlenstoff-Kohlenstoff-Mehrfachbindungen und Si-gebundene Wasserstoffatome aufweisen, enthalten.

Falls Siloxane (C) eingesetzt werden, handelt es sich vorzugsweise um solche aus Einheiten der Formeln

R_{g}SiO_{4-g/2}, RₕR^{y}SiO_{3-h/2} und RᵢHSiO_{3-i/2},

wobei hier
- R und R^{y}: die oben angegebene Bedeutung haben,
- g: 0, 1, 2 oder 3 ist,
- h: 0, 1 oder 2 ist und
- i: 0, 1 oder 2 ist,
mit der Maßgabe, dass je Molekül mindestens 2 Reste R^{y} und mindestens 2 Si-gebundene Wasserstoffatome vorliegen.

Beispiele für Organopolysiloxane (C) sind solche aus SiO_{4/2}-, R₃SiO_{1/2}-, R₂R^{y}SiO_{1/2}- und R₂HSiO_{1/2}-Einheiten, sogenannte MQ-Harze, wobei diese Harze zusätzlich RSiO_{3/2}- und R₂SiO-Einheiten enthalten können, sowie lineare Organopolysiloxane im wesentlichen bestehend aus R₂R^{y}SiO_{1/2}-, R₂SiO- und RHSiO-Einheiten mit R und R^{y} gleich der oben genannten Bedeutung.

Die Organopolysiloxane (C) besitzen vorzugsweise eine durchschnittliche Viskosität von 0,01 bis 500 000 Pa·s, besonders bevorzugt 0,1 bis 100 000 Pa·s, jeweils bei 25°C. Organopolysiloxane (C) sind nach in der Chemie gängigen Methoden herstellbar.

Außer den Komponenten (A) bis (D) können die erfindungsgemäßen härtbaren Zusammensetzungen noch alle weiteren Stoffe enthalten, die auch bisher zur Herstellung von additionsvernetzbaren Massen eingesetzt wurden.

Beispiele für verstärkende Füllstoffe, die als Komponente (E) in den erfindungsgemäßen Massen eingesetzt werden können, sind pyrogene oder gefällte Kieselsäuren mit BET-Oberflächen von mindestens 50 m²/g sowie Ruße und Aktivkohlen, wie Furnace-Ruß und Acetylen-Ruß, wobei pyrogene und gefällte Kieselsäuren mit BET-Oberflächen von mindestens 50 m²/g bevorzugt sind.

Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der Gehalt der erfindungsgemäßen vernetzbaren Masse an aktiv verstärkendem Füllstoff (E) liegt im Bereich von 0 bis 70 Gew.-%, vorzugsweise bei 0 bis 50 Gew.-%.

Die erfindungsgemäßen Zusammensetzungen, insbesondere die Polyorganosiloxanmassen, können wahlweise als Bestandteil (F) weitere Zusätze zu einem Anteil von bis zu 70 Gew.-%, vorzugsweise 0,0001 bis 40 Gew.-%, enthalten. Diese Zusätze können z. B. inaktive Füllstoffe, harzartige Polyorganosiloxane, die von den Siloxanen (A), (B) und (C) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Farbstoffe, Pigmente usw.

Die Herstellung der erfindungsgemäßen Zusammensetzungen, insbesondere der Organopolysiloxanmassen, kann nach bekannten Verfahren erfolgen, wie beispielsweise durch gleichmäßige Vermischung der einzelnen Komponenten. Die Reihenfolge dabei ist beliebig, vorzuziehen ist jedoch die gleichmäßige Vermischung des erfindungsgemäßen Ruthenium-Katalysators (D) mit einer Mischung aus (A) und (B) bzw. (C), gegebenenfalls (E) und (F). Der erfindungsgemäß eingesetzte Ruthenium-Katalysator (D) kann dabei als Festsubstanz oder als sog. Batch - gleichmäßig mit einer geringen Menge (A) oder (A) mit (E) vermischt - eingearbeitet werden. Die Vermischung erfolgt dabei abhängig von der Viskosität von (A) beispielsweise mit einem Rührer, in einem Dissolver, auf einer Walze oder in einem Kneter.

Die nachfolgenden Beispiele dienen der Veranschaulichung der erfindungsgemäßen Verwendung des erfindungsgemäßen Verfahrens und der erfindungsgemäßen Zusammensetzungen und sind in keinster Weise als Einschränkung zu betrachten.

### Beispiele

### Vergleichs-Beispiel 1: Hydrosilylierung von HMe₂SiO-[SiMe₂O]ₓ-SiMe₂H (x ≈ 13) (H-Polymer 13) mit 3-Vinylheptamethyltrisiloxan - nicht erfindumgsgemäß-

Ein Gemisch aus 3,8 g (ca. 4 mmol) H-Polymer 13 und 1,99 g (8 mmol) 3-Vinylheptamethyltrisiloxan wird mit der entsprechenden Menge eines Ru-Katalysators (300 ppm Ru) versetzt und bei 120°C unter Argon-Atmosphäre gerührt. Die Analytik der Hydrosilylierungsreaktion (Umsatz, Selektivität, Ausbeute) erfolgt per ¹H-NMR.

| **Katalysator** | **Reaktionszeit** | **Umsatz** | **Selektivität** | **Ausbeute** |
|---|---|---|---|---|
| Ru(η⁴-COD)(η⁶-COT) | 1 h | 100 | 71 | 71 |
| Ru(η⁴-COD)(2-methallyl)₂ | 1 h | 100 | 65 | 65 |
| Ru(η⁴-p-Cymen)(η⁴-COD) | 1 h | 91 | 83 | 76 |
| Ru(η⁶-Toluen)(dmfm)₂ | 1 h | 99 | 87 | 86 |
| Ru(η⁶-C₆H₆)(η⁴-C₆H₈) | 1 h | 48 | 79 | 38 |
| Ru(η⁶-C₆H₆)(η⁴-C₆H₈) | 2 h | 69 | 84 | 58 |
| (η⁵-Cp*)Ru(Cl)(η⁴-COD) | 1 h | 69 | 69 | 48 |
| (η⁵-Cp*)Ru(Cl)(η⁴-COD) | 2 h | 84 | 70 | 58 |
| | | | | |
| **Vergleichsbeispiele** | | | | |
| Ru(PPh₃)₃Cl₂ | 2 h | 72 | 19 | 14 |
| Ru(CO)₃(PPh₃)₂ | 2 h | 75 | 72 | 54 |
| RuCl₃ * 3 H₂O · | 2 h | 2 | 20 | 1 |
| K₂RuCl₅ * X H₂O | 2 h | 65 | 75 | 49 |
| [RuCl₂(CO)₃]₂ | 2 h | 93 | 13 | 12 |
| CpRu(PPh₃)₂Cl | 2 h | 66 | 44 | 29 |
| [Pt₂(TMDVS)₃]_{,} "Karstedt-Katalysator" (100 ppm Pt) | 1 h | 100 | 91 | 91 |

| | | | | |
|---|---|---|---|---|
| Legende: COD = 1,5-Cyclooctadien; COT = 1,3,5-Cyclooctatrien; dmfm = dimethylfumarat; (η⁴-C₆H₈) = 1,3-Cyclohexadien; Cp* = Pentamethylcyclopentadienyl; TMDVS = Tetramethyl-divinyl-disiloxan | | | | |

### Beispiel 2: Vernetzung eines α,ω-Divinyl-polydimethylsiloxans mit einem SiH-funktionellen Polysiloxan bei 120°C

10 g eines α,ω-Divinyl-polydimethylsiloxans, viskosität η = 500 mPa·s (Wacker-interner Name VIPO 500) werden mit dem Ru-Katalysator (300 ppm Ru bezogen auf die Gesamtmasse des Ansatzes) versetzt, in einem Rundkolben unter Ultraschallbehandlung intensiv vermischt und mit 250 mg eines SiH-funktionellen Polysiloxans der Formel Me₃SiO-[Si(H)Me-O]₄₈-SiMe₃ (Wacker-interner Name Vernetzer V24) versetzt und nochmals intensiv vermischt.

Der Ansatz wird in einem vortemperierten Ölbad bei 120°C und 500 U/Min. unter Argon gerührt. Es wird die Zeit bestimmt, bis der Gelierungsvorgang soweit fortgeschritten ist, dass ein Rühren mit einem "Magnetrührfisch" nicht mehr in vollem Umfang möglich ist.

| **Katalysator** | **Gelierungszeit** |
|---|---|
| Ru(η⁴-COD)(η⁶-COT) | 25 s |
| Ru(η⁴-COD)(2-methallyl)₂ | 1 Min. 45 s |
| Ru(η⁶-p-Cymen)(η⁴-COD) | 2 Min. 40 s |
| Ru(η⁶-C₆H₆)(η⁴-C₆H₈) | 5 Min. |
| (η⁵-Cp*)Ru(Cl)(η⁴-COD) | 8 Min. 30 s |
| | |
| **Vergleichsbeispiele** | |
| [(p-Cymol)RuCl₂]₂ | 38 Min. |
| Ru(CO)₃(PPh₃)₂ | > 5 h |
| K₂RuCl₅ * x H₂O | > 5 h |
| RuCl₃ * 3 H₂O | > 5 h |
| [Pt₂(TMDVS)₃], "Karstedt-Katalysator" (100 ppm Pt) | < 5 s |

| | |
|---|---|
| Legende: COD = 1,5-Cyclooctadien; COT = 1,3,5-Cyclooctatrien; (η⁴-C₆H₈) = 1,3-Cycloohexadien; Cp* = Pentamethylcyclopentadienyl; TMDVS = Tetramethyl-divinyl-disiloxan | |

### Beispiel 3: Vernetzung eines α,ω-Divinyl-polydimethylsiloxans mit einem SiH-funktionellen Polysiloxan bei Raumtemperatur (ca. 20°C)

Der Ansatz aus Beispiel 2 wird bei Raumtemperatur (ca. 20°C) unter Argon stehen gelassen und die Zeit bestimmt, bis das System nicht mehr fließfähig ist ("Topfzeit").

| **Katalysator** | **"Topfzeit"** |
|---|---|
| Ru(η⁴-COD)(η⁶-COT) | 1 Min. |
| Ru(η⁴-COD)(2-methallyl)₂ | 2 h 10 Min. |
| Ru(η⁶-C₆H₆)(η⁴-C₆H₈) | 8 h |
| | |
| **Vergleichsbeispiele** | |
| [(p-Cymol)RuCl₂]₂ | > 1 d |
| Ru(CO)₃(PPh₃)₂ | > 1 d |
| K₂RuCl₅ * x H₂O | > 1 d |
| RuCl₃ * 3 H₂O | > 1 d |

| | |
|---|---|
| Legende: COD = 1,5-Cyclooctadien; COT = 1,3,5-Cyclooctatrien; (η⁴-C₆H₈) = 1, 3-Cyclohexadien | |

### Beispiel 4: Vernetzung eines α,ω-Divinyl-polydimethylsiloxans mit einem SiH-funktionellen Polysiloxan in dünnen Schichten bei 120°C

Der Ansatz aus Beispiel 2 wird mit einem Drahtrakel (60 µ) als Schicht auf einen Glasobjektträger aufgezogen und auf einer Heizbank bei 120°C temperiert.

Die Qualität der Vernetzung wird per smear- bzw. rub-off-Test bestimmt, der nach bestimmten Zeiten durchgeführt wird, wobei eine Benotung nach folgenden Kriterien erfolgt:

| | |
|---|---|
| 6: | flüssiges System |
| 5: | flüssiges System mit anvernetzten Zonen |
| 4: | vernetzte Schicht, nach 1 Fingerrieb zerstört |
| 3: | vernetzte Schicht, nach 2 - 4 Fingerrieben zerstört |
| 2: | vernetzte Schicht, nach > 4 Fingerrieben zerstört |
| 1: | vernetzte Schicht, die durch Fingerriebe nicht mehr zerstört werden kann |

| **Katalysator** | **Objektträger** |
|---|---|
| Ru(η⁴-COD)(η⁶-COT) | Beschichtung mit 300 ppm Ru nicht möglich, da sofortiger Viskositätsanstieg bei Raumtemperatur |
| Ru(η⁶-C₆H₆)(η⁴-C₆H₈) | 30 s: 5 |
| | 5 Min.: 4 |
| Ru(η⁴-COD)(2-methallyl)₂ | 5 s: 5 |
| | 10 s: 4 |
| | 30 s: 3 |
| | 10 Min.: 2 |
| | |
| **Vergleichsbeispiel** | |
| Ru(CO)₃(PPh₃)₂ | 10 Min.: 6 |

### Beispiel 5: Vernetzung eines α,ω-Divinyl-polydimethylsiloxans mit einem SiH-funktionellen Polysiloxan in dünnen Schichten bei 120°C unter Zusatz eines Lösungsmittels

10 g eines α,ω-Divinyl-polydimethylsiloxans, Viskosität η = 500 mPa·s (Wacker-interner Name VIPO 500) werden mit einer Lösung des Ru-Katalysators (300 ppm Ru bezogen auf die Gesamtmasse des Ansatzes) in einem organischen Lösungsmittel versetzt und intensiv vermischt. Anschließend wird das homogene Gemisch im Vakuum bei 10⁻² mbar 15 Min. gerührt und bei Normaldruck mit 250 mg eines SiH-funktionellen Polysiloxans der Formel Me₃SiO-[Si(H)Me-O]₉₈-SiMe₃ (Wacker-interner Name Vernetzer V24) versetzt und nochmals intensiv vermischt.

In Analogie zu Beispiel 4 wird der Ansatz mit einem Drahtrakel (60 µ) als Schicht auf einen Glasobjektträger aufgezogen und auf einer Heizbank bei 120°C temperiert.

Die Qualität der Vernetzung wird wiederum per smear- bzw. rub-off-Test nach bestimmten Zeiten ermittelt, wobei die Benotung nach den in Beispiel 4 genannten Kriterien erfolgt.

| **Katalysator** | **Lösemittel-Menge** | **Objektträger** |
|---|---|---|
| Ru(η⁴-COD)(η⁶-COT) / THF | 1.5 Gew.-% THF | 7 s: 1 |
| Ru(η⁶-p-Cymen)(η⁴-COD) / Toluol | 2 Gew.-% Toluol | 30 s: 3 |
| | | 2 Min.: 2 |
| | | 4 Min.: 1 |
| Ru(η⁶-C₆H₆)(η⁴-C₆H₈) / CH₂Cl₂ | 1 Gew.-% CH₂Cl₂ | 20 s: 5 |
| | | 1 Min.: 4 |
| | | 10 Min.: 3 |
| | | 20 Min.:2 |
| Ru(η⁴-COD)(2-methallyl)₂ / CH₂Cl₂ | 0.5 Gew.-% CH₂Cl₂ | 5 s: 5 |
| | | 10 s: 4 |
| | | 30 s: 3 |
| | | 1 Min.: 2 |
| | | 10 Min.: 1 |

| | | |
|---|---|---|
| Legende: COD = 1,5-Cyclooctadien; COT = 1,3,5-Cyclooctatrien; THF = Tetrahydrofuran; (η⁴-C₆H₈) = 1,3-Cylcohexadien | | |

Beispiel 5 zeigt, dass die Homogenisierung unter Zuhilfenahme eines Lösungsmittels vorteilhaft bezüglich der Schichtbildung ist (vgl. die entsprechenden Beispiele ohne Lösungsmittel in Beispiel 4).

### Beispiel 6: Vernetzung eines α,ω-Divinyl-polydimethylsiloxans mit einem SiH-funktionellen Polysiloxan in dünnen Schichten bei 120°C unter Verwendung von Ru(η⁴-COD)(η⁶-COT) als Katalysator mit 50 ppm Ru

Analog zu Beispiel 4 unter Verwendung von Ru(η⁴-COD)(η⁶-COT) als Katalysator mit 50 ppm Ru

| **Katalysator** | **Objektträger** |
|---|---|
| Ru(η⁴-COD)(η⁶-COT) | 30 s: 5 |
| | 1 Min.: 4 |
| | 20 Min.: 3 |

| | |
|---|---|
| Legende: COD = 1,5-Cyclooctadien; COT = 1,3,5-Cyclooctatrien | |

Beispiel 6 zeigt, dass mit Ru(η⁴-COD)(η⁶-COT) auch bereits mit 50 ppm Ru eine vernetzte Schicht erzeugt werden kann.

## Patentansprüche

1. Verfahren zur Herstellung von vernetzten Siliconen durch Umsetzung von
(i) mindestens einer Verbindung ausgewählt aus der Gruppe enthaltend die Verbindungen (A), (B) und (C),
- wobei (A), (B) und (C) so gewählt werden, dass eine Vernetzung möglich ist und
- die Verbindung (A) mindestens zwei aliphatisch ungesättigte Reste aufweist und Siloxan (B) mindestens drei Si-gebundene Wasserstoffatome, oder
- die Verbindung (A) mindestens drei aliphatisch ungesättigte Reste aufweist und Siloxan (B) mindestens zwei Si-gebundene Wasserstoffatome, oder
- anstelle von Verbindung (A) und (B) ein Siloxan (C) eingesetzt wird, welches aliphatisch ungesättigte Reste und Si-gebundene Wasserstoffatome in den oben genannten Verhältnissen aufweist,
(ii)mit einer Ruthenium-Verbindung deren Ligandensphäre mindestens zwei unabhängige Kohlenstoff-π-gebundene Liganden aufweist, wobei mindestens einer dieser Liganden ausgewählt wird aus der Gruppe enthaltend η⁶-gebundene Arenliganden, η⁶-gebundene Trienliganden, η⁴-gebundene 1,5-Cyclooctadienliganden und η⁴-gebundene 1,3,5-Cyclooctatrienliganden.

2. Verfahren nach Anspruch 1, **dadurch gekennzeichnet, dass** die Ruthenium-Verbindung die allgemeine Formel (1) besitzt, 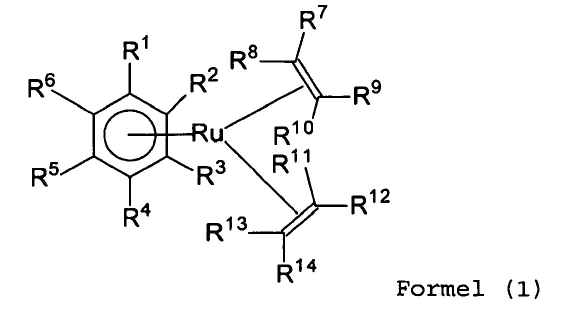 wobei
R¹ bis R⁶ unabhängig voneinander ausgewählt werden aus der Gruppe enthaltend Wasserstoff (H); Alkyl; Aryl; Halogen; OR', wobei R' wiederum ausgewählt wird aus der Gruppe enthaltend Wasserstoff (H), Alkyl und Aryl; CO₂R", wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl, mit der Maßgabe, dass zwei benachbarte Reste R¹ bis R⁶ optional einen weiteren Ring bilden können; und
R⁷ bis R¹⁴ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl, mit der Maßgabe, dass optional Reste aus R⁷ bis R¹⁰ und aus R¹¹ bis R¹⁴ - mit oder ohne zusätzlichem Spacer - miteinander verbunden sein können und so insgesamt ein mehrzähniger, acyclischer oder cyclischer Ligand gebildet wird.

3. Verfahren nach Anspruch 1, **dadurch gekennzeichnet, dass** die Ruthenium-Verbindung die allgemeine Formel (2) besitzt, 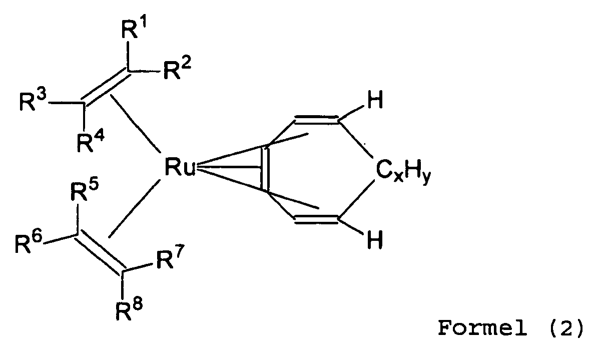 wobei
R¹ bis R⁸ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO; C(O)R"', wobei R"' hier wiederum ausgewählt wird aus der Gruppe enthaltend Alkyl, Aryl und NR₂, wobei R wiederum ausgewählt wird aus Wasserstoff (H) und Alkyl, mit der Maßgabe, dass optional Reste aus R¹ bis R⁴ und R⁵ bis R⁸ - mit oder ohne zusätzlichem Spacer - miteinander verbunden sein können und so insgesamt ein mehrzähniger, acyclischer oder cyclischer Ligand gebildet wird; und
x = 1 und y = 2 ;
x = 2 und y = 2 ; und
x = 2 und y = 4 sein kann.

4. Verfahren nach Anspruch 1, **dadurch gekennzeichnet, dass** die Ruthenium-Verbindung die allgemeinen Formel (3) besitzt, 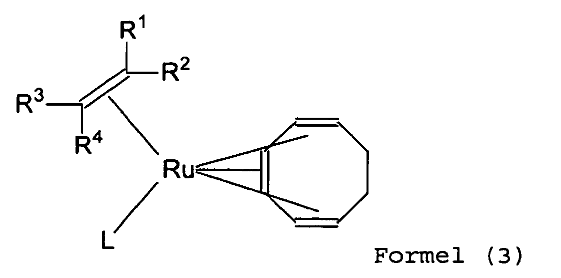 wobei
R¹ bis R⁴ unabhängig voneinander ausgewählt werden aus der Gruppe enthaltend Wasserstoff (H); Alkyl; Aryl; Halogen; Silyl; Siloxy; CN; CO₂R", wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl; und
L ausgewählt wird aus der Gruppe enthaltend PR"'₃ und P(OR"')₃, wobei R"' hier wiederum ausgewählt wird aus Alkyl und Aryl; NR₂H, wobei R hier wiederum ausgewählt wird aus Wasserstoff (H), Alkyl und Alkylaryl; Morpholin und Pyridin.

5. Verfahren nach Anspruch 1, **dadurch gekennzeichnet, dass** die Ruthenium-Verbindung die allgemeine Formel (4) besitzt, 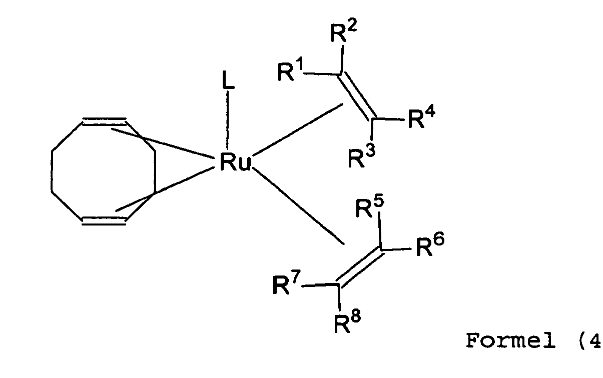 wobei
R¹ bis R⁸ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl, mit der Maßgabe, dass optional Reste aus R¹ bis R⁴ und R⁵ bis R⁸ - mit oder ohne zusätzlichem Spacer - miteinander verbunden sein können und so insgesamt ein mehrzähniger, acyclischer oder cyclischer Ligand gebildet wird, beispielsweise 1,3,5-Cyclooctatrien; und
L ausgewählt wird aus der Gruppe enthaltend CO; CNR"', wobei R"' wiederum ausgewählt wird aus der Gruppe enthaltend Alkyl und Aryl; PR"'₃ und P(OR"')₃ , wobei R"' wiederum ausgewählt wird aus der Gruppe enthaltend Alkyl und Aryl; Liganden enthaltend N-Donatoren; Liganden enthaltend S-Donatoren und Liganden enthaltend O-Donatoren.

6. Verfahren nach Anspruch 1, **dadurch gekennzeichnet, dass** die Ruthenium-Verbindung die allgemeine Formel (5) besitzt, 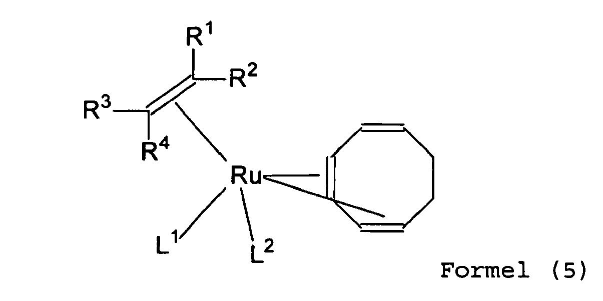 wobei
R¹ bis R⁴ unabhängig voneinander ausgewählt werden aus der Gruppe enthaltend Wasserstoff (H); Alkyl; Aryl; Halogen; Silyl; Siloxy; CN; CO₂R" wobei R" wiederum ausgewählt wird aus der Gruppe enthaltend Wasserstoff (H) und Alkyl; CHO und C(O)R"', wobei R"' wiederum ausgewählt wird aus der Gruppe enthaltend Alkyl und Aryl; und
L¹ und L² unabhängig voneinander ausgewählt werden aus CO; CNR"', wobei R"' wiederum ausgewählt wird aus der Gruppe enthaltend Alkyl und Aryl; PR"'₃ und P(OR"')₃, wobei R"' wiederum ausgewählt wird aus der Gruppe enthaltend Alkyl und Aryl; Liganden enthaltend N-Donatoren; Liganden enthaltend S-Donatoren und Liganden enthaltend O-Donatoren, mit der Maßgabe, dass L¹ und L² optional auch mit einander verknüpft sein und einen Ring bilden können.

7. Verfahren nach Anspruch 1, **dadurch gekennzeichnet, dass** die Ruthenium-Verbindung die allgemeine Formel (6) besitzt 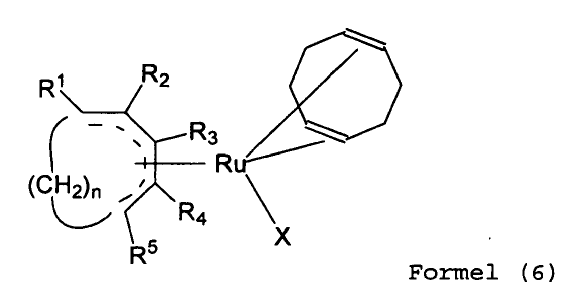 wobei R¹ bis R⁵ unabhängig voneinander ausgewählt werden aus der Gruppe enthaltend Wasserstoff (H); Alkyl; Aryl; und
die gestrichelte Linie in der allgemeinen Formel (6) für eine oder mehrere konjugierte oder nicht konjugierte Doppelbindungen steht; und
n für 0, 2 oder 3 steht; und
X für einen beliebigen einwertigen anionischen Liganden steht.

8. Verfahren nach Anspruch 1, **dadurch gekennzeichnet, dass** die Ruthenium-Verbindung die allgemeine Formel (7) besitzt, 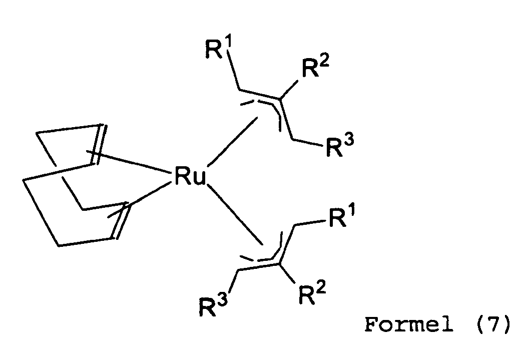 wobei
R¹ bis R³ unabhängig voneinander ausgewählt werden aus der Gruppe enthaltend Wasserstoff (H) und Alkyl.

9. Verfahren nach Anspruch 1 bis 8 zur Herstellung von Siliconelastomeren.

10. Verfahren nach Anspruch 1 bis 8 zur Herstellung von siliconhaltigen Beschichtungen.

## Claims

1. A process for preparing crosslinked silicones by reacting
(i) at least one compound selected from the group comprising the compounds (A), (B) and (C),
- where (A), (B) and (C) are selected such that crosslinking is possible and
- compound (A) has at least two aliphatically unsaturated radicals and siloxane (B) has at least three Si-bonded hydrogen atoms, or
- compound (A) has at least three aliphatically unsaturated radicals and siloxane (B) has at least two Si-bonded hydrogen atoms, or
- instead of compound (A) and (B), a siloxane (C) which has aliphatically unsaturated radicals and Si-bonded hydrogen atoms in the abovementioned ratios is used,
(ii) with a ruthenium compound whose ligand sphere has at least two independent carbon π-bonded ligands, at least one of these ligands being selected from the group comprising η⁶-bonded arene ligands, η⁶-bonded triene ligands, η⁴-bonded 1,5-cyclooctadiene ligands and η⁴-bonded 1,3,5-cyclooctatriene ligands.

2. The process as claimed in claim 1, **characterized in that** the ruthenium compound has the general formula (1) 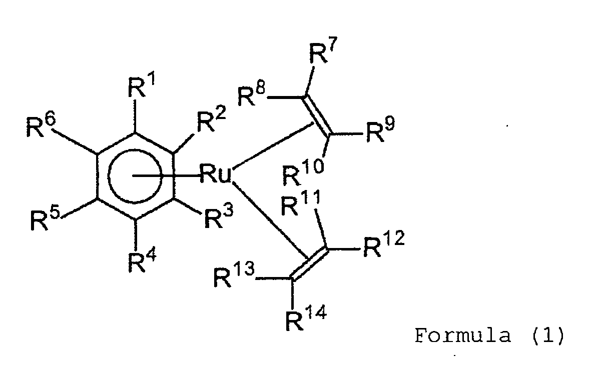 where
R¹ to R⁶ are each independently selected from the group comprising hydrogen (H); alkyl; aryl; halogen; OR' where R' in turn is selected from the group comprising hydrogen (H), alkyl and aryl; CO₂R" where R" in turn is selected from the group comprising hydrogen (H) and alkyl; CHO and C(O)R'" where R"' in turn is selected from the group comprising alkyl and aryl, with the proviso that two adjacent R¹ to R⁶ radicals may optionally form a further ring; and
R⁷ to R¹⁴ are each independently selected from the group comprising hydrogen (H); alkyl; aryl; halogen; silyl; siloxy; CN; CO₂R" where R" in turn is selected from the group comprising hydrogen (H) and alkyl; CHO and C(O)R"' where R"' in turn is selected from the group comprising alkyl and aryl, with the proviso that radicals from R⁷ to R¹⁰ and from R¹¹ to R¹⁴ - with or without additional spacers - may optionally be joined to one another, thus forming, overall, a polydentate acyclic or cyclic ligand.

3. The process as claimed in claim 1, **characterized in that** the ruthenium compound has the general formula (2) 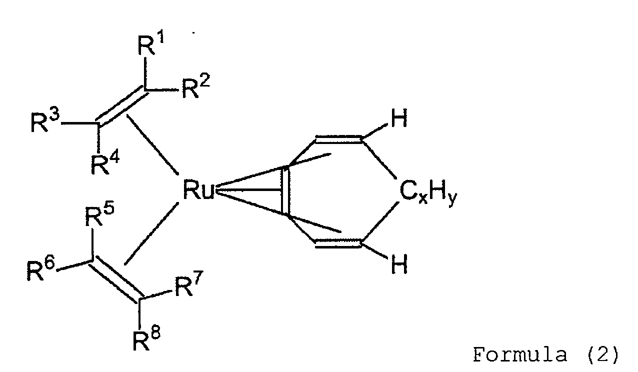 where
R¹ to R⁸ are each independently selected from the group comprising hydrogen (H); alkyl; aryl; halogen; silyl; siloxy; CN; CO₂R" where R" in turn is selected from the group comprising hydrogen (H) and alkyl; CHO; C(O)R'" where R"' here in turn is selected from the group comprising alkyl, aryl and NR₂ where R in turn is selected from hydrogen (H) and alkyl, with the proviso that radicals from R¹ to R⁴ and R⁵ to R⁸ - with or without additional spacers - may optionally be joined to one another, thus forming, overall, a polydentate acyclic or cyclic ligand; and
x = 1 and y = 2;
x = 2 and y = 2; or
x = 2 and y = 4.

4. The process as claimed in claim 1, **characterized in that** the ruthenium compound has the general formula (3) 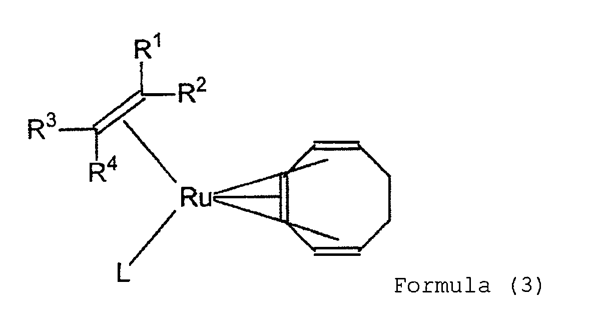 where
R¹ to R⁴ are each independently selected from the group comprising hydrogen (H); alkyl; aryl; halogen; silyl; siloxy; CN; CO₂R" where R" in turn is selected from the group comprising hydrogen (H) and alkyl; CHO and C(O)R'" where R'" in turn is selected from the group comprising alkyl and aryl; and
L is selected from the group comprising PR"'₃ and P(OR"')₃, where R"' here in turn is selected from alkyl and aryl; NR₂H where R here in turn is selected from hydrogen (H), alkyl and alkylaryl; morpholine and pyridine.

5. The process as claimed in claim 1, **characterized in that** the ruthenium compound has the general formula (4) 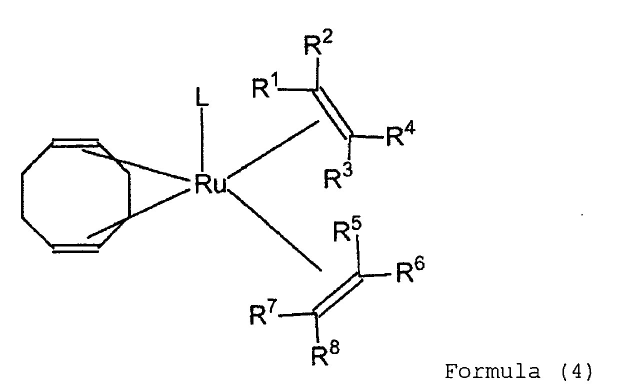 where
R¹ to R⁸ are each independently selected from the group comprising hydrogen (H); alkyl; aryl; halogen; silyl; siloxy; CN; CO₂R" where R" in turn is selected from the group comprising hydrogen (H) and alkyl; CHO and C(O)R"' where R'" in turn is selected from the group comprising alkyl and aryl, with the proviso that radicals from R¹ to R⁴ and R⁵ to R⁸ - with or without additional spacers - may optionally be joined to one another, thus forming, overall, a polydentate acyclic or cyclic ligand, for example 1,3,5-cyclooctatriene; and
L is selected from the group comprising CO; CNR"' where R"' in turn is selected from the group comprising alkyl and aryl; PR"'₃ and P(OR"')₃, where R"' in turn is selected from the group comprising alkyl and aryl; ligands containing N donors; ligands containing S donors and ligands containing O donors.

6. The process as claimed in claim 1, **characterized in that** the ruthenium compound has the general formula (5) 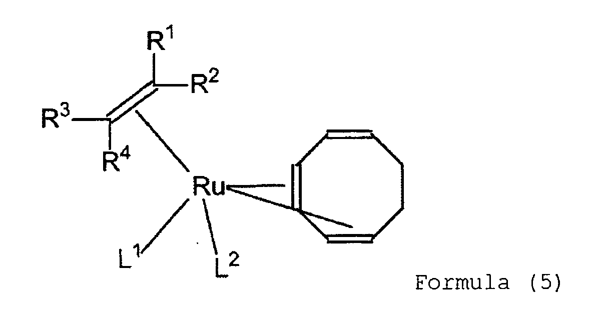 where
R¹ to R⁴ are each independently selected from the group comprising hydrogen (H); alkyl; aryl; halogen; silyl; siloxy; CN; CO₂R" where R" in turn is selected from the group comprising hydrogen (H) and alkyl; CHO and C(O)R"' where R"' in turn is selected from the group comprising alkyl and aryl; and
L¹ and L² are each independently selected from CO; CNR"', where R"' in turn is selected from the group comprising alkyl and aryl; PR"'₃ and P(OR"')₃, where R"' in turn is selected from the group comprising alkyl and aryl; ligands containing N donors; ligands containing S donors and ligands containing O donors, with the proviso that L¹ and L² may optionally also be joined to one another and may form a ring.

7. The process as claimed in claim 1, **characterized in that** the ruthenium compound has the general formula (6) 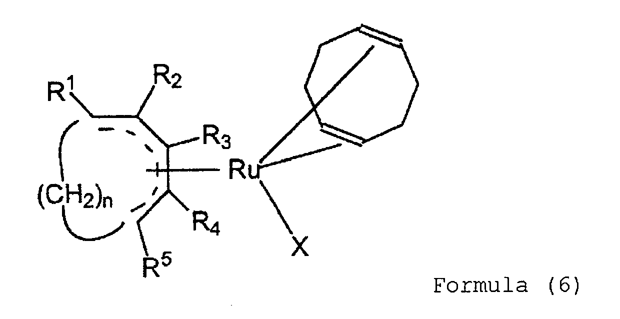 where R¹ to R⁵ are each independently selected from the group comprising hydrogen (H); alkyl; aryl; and
the dotted line in the general formula (6) represents one or more conjugated or nonconjugated double bonds; and
n is 0, 2 or 3; and
X is any monovalent anionic ligand.

8. The process as claimed in claim 1, **characterized in that** the ruthenium compound has the general formula (7) 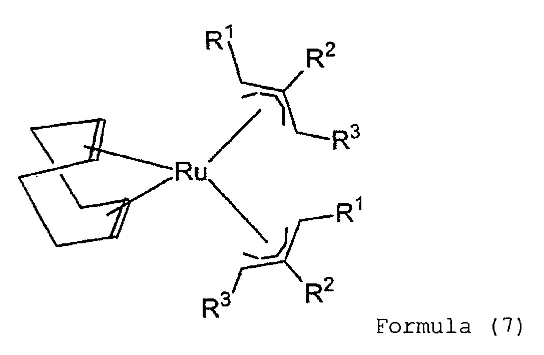 where R¹ to R³ are each independently selected from the group comprising hydrogen (H) and alkyl.

9. The process as claimed in claim 1 to 8 for producing silicone elastomers.

10. The process as claimed in claim 1 to 8 for producing silicone-containing coatings.

## Revendications

1. Procédé pour la production de silicones réticulées, par mise en réaction de
(i) au moins un composé choisi dans l'ensemble contenant les composés (A), (B) et (C),
- (A), (B) et (C) étant choisis de manière à ce qu'une réticulation soit possible et
- le composé (A) comportant au moins deux radicaux à insaturation aliphatique, et le siloxane (B) comportant au moins trois atomes d'hydrogène liés au silicium, ou
- le composé (A) comportant au moins trois radicaux à insaturation aliphatique et le siloxane (B) comportant au moins deux atomes d'hydrogène liés au silicium, ou
- au lieu du composé (A) et du composé (B) un siloxane (C), qui comporte en les rapports indiqués ci-dessus des radicaux à insaturation aliphatique et des atomes d'hydrogène liés au silicium, étant utilisé,
(ii) avec un composé contenant du ruthénium, dont la sphère de ligands comporte au moins deux ligands indépendants liés par des liaisons carbonées π, au moins l'un de ces ligands étant choisi dans l'ensemble comprenant des ligands arène à liaison η⁶, des ligands triène à liaison η⁶, des ligands 1,5-cyclo-octadiène à liaison ^{η}4 et des ligands 1,3,5-cyclo-octatriène à liaison η⁴.

2. Procédé selon la revendication 1, **caractérisé en ce que** le composé contenant du ruthénium présente la formule générale (1) 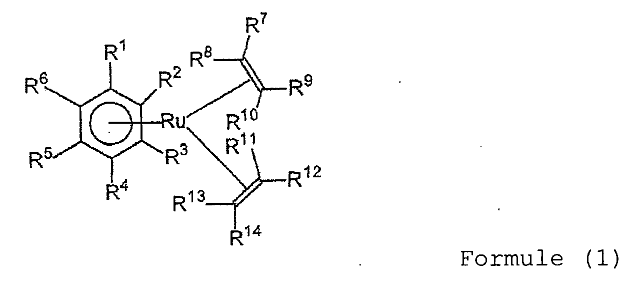 dans laquelle
R¹ à R⁶ sont choisis, indépendamment les uns des autres, dans l'ensemble contenant l'atome d'hydrogène (H) ; des groupes alkyle ; des groupes aryle ; des atomes d'halogène ; OR', R' à son tour étant choisi dans l'ensemble contenant l'atome d'hydrogène (H), des groupes alkyle et aryle ; CO₂R", R" étant à son tour choisi dans l'ensemble contenant l'atome d'hydrogène (H) et des groupes alkyle ; CHO et C(O)R"', R"' étant à son tour choisi dans l'ensemble contenant des groupes alkyle et aryle, étant entendu que deux radicaux R¹ à R⁶ adjacents peuvent en option former un autre cycle ; et
R⁷ à R¹⁴ sont choisis, indépendamment les uns des autres, dans l'ensemble contenant l'atome d'hydrogène (H) ; des groupes alkyle ; des groupes aryle ; des atomes d'halogène ; des groupes silyle ; des groupes siloxy ; CN ; CO₂R", R" étant à son tour choisi dans l'ensemble contenant l'atome d'hydrogène (H) et des groupes alkyle ; CHO et C(O)R"', R"' étant à son tour choisi dans l'ensemble contenant des groupes alkyle et aryle, étant entendu que des radicaux parmi R⁷ à R¹⁰ et parmi R¹¹ à R¹⁴ - avec ou sans espaceur supplémentaire - peuvent en option être liés les uns aux autres pour former ainsi dans l'ensemble un ligand cyclique ou acyclique polydenté.

3. Procédé selon la revendication 1, **caractérisé en ce que** le composé contenant du ruthénium présente la formule générale (2) 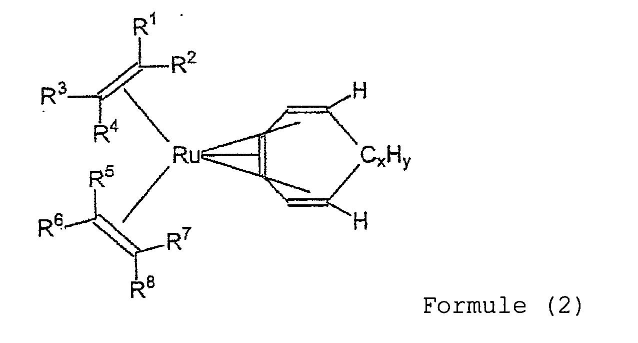 dans laquelle
R¹ à R⁸ sont choisis, indépendamment les uns des autres, dans l'ensemble contenant l'atome d'hydrogène (H) ; des groupes alkyle ; des groupes aryle ; des atomes d'halogène ; des groupes silyle ; des groupes siloxy ; CN ; CO₂R", R" étant à son tour choisi dans l'ensemble contenant l'atome d'hydrogène (H) et des groupes alkyle ; CHO ; C(O)R"', R"' étant ici à son tour choisi dans l'ensemble contenant des groupes alkyle, des groupes aryle et NR₂, R étant à son tour choisi parmi l'atome d'hydrogène (H) et un groupe alkyle, étant entendu que des radicaux parmi R¹ à R⁴ et parmi R⁵ à R⁸ - avec ou sans espaceur supplémèntaire - peuvent en option être liés les uns aux autres pour former ainsi dans l'ensemble un ligand cyclique ou acyclique polydenté ; et
x = 1 et y = 2 ;
x = 2 et y = 2 ; et
x = 2 et y = 4.

4. Procédé selon la revendication 1, **caractérisé en ce que** le composé contenant du ruthénium présente la formule générale (3) 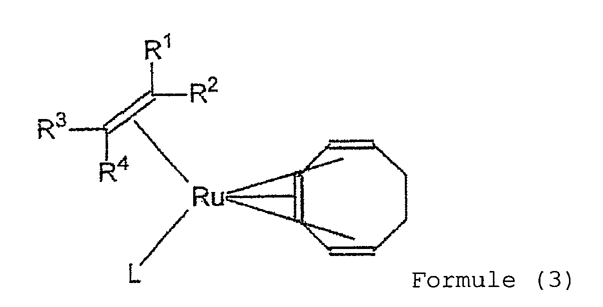 dans laquelle
R¹ à R⁴ sont choisis, indépendamment les uns des autres, dans l'ensemble contenant l'atome d'hydrogène (H) ; des groupes alkyle ; des groupes aryle ; des atomes d'halogène ; des groupes silyle ; des groupes siloxy ; CN ; CO₂R", R" étant à son tour choisi dans l'ensemble contenant l'atome d'hydrogène (H) et des groupes alkyle ; CHO et C(O)R"', R"' étant à son tour choisi dans l'ensemble contenant des groupes alkyle et aryle ; et
L est choisi dans l'ensemble contenant PR"'₃ et P(OR"')₃, R"' étant ici choisi à son tour parmi des groupes alkyle et aryle ; NR₂H, R étant ici choisi à son tour parmi l'atome d'hydrogène (H), des groupes alkyle et alkylaryle ; morpholine et pyridine.

5. Procédé selon la revendication 1, **caractérisé en ce que** le composé contenant du ruthénium présente la formule générale (4) 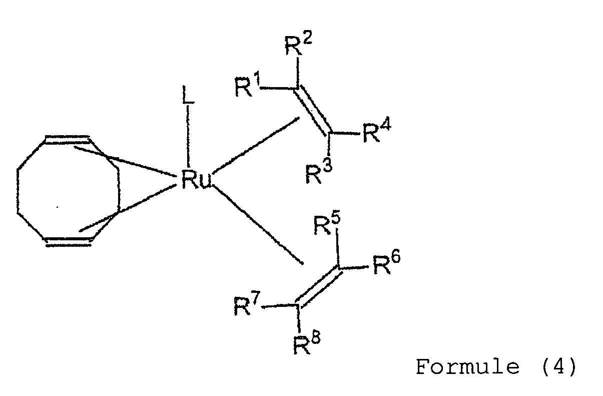 dans laquelle
R¹ à R⁸ sont choisis, indépendamment les uns des autres, dans l'ensemble contenant l'atome d'hydrogène (H) ; des groupes alkyle ; des groupes aryle ; des atomes d'halogène ; des groupes silyle ; des groupes siloxy ; CN ; CO₂R", R" étant à son tour choisi dans l'ensemble contenant l'atome d'hydrogène (H) et des groupes alkyle ; CHO et C(O)R"', R"' étant à son tour choisi dans l'ensemble contenant des groupes alkyle et aryle, étant entendu que des radicaux parmi R¹ à R⁴ et parmi R⁵ à R⁸ - avec ou sans espaceur supplémentaire - peuvent en option être liés les uns aux autres pour former ainsi dans l'ensemble un ligand cyclique ou acyclique polydenté, par exemple 1,3,5-cyclo-octatriène ; et
L est choisi dans l'ensemble contenant CO ; CNR"', R"' étant choisi à son tour dans l'ensemble contenant des groupes alkyle et aryle ; PR"'₃ et P(OR"')₃, R"' étant choisi à son tour dans l'ensemble contenant des groupes alkyle et aryle ; des ligands contenant des donneurs d'azote ; des ligands contenant des donneurs de soufre et des ligands contenant des donneurs d'oxygène.

6. Procédé selon la revendication 1, **caractérisé en ce que** le composé contenant du ruthénium présente la formule générale (5) 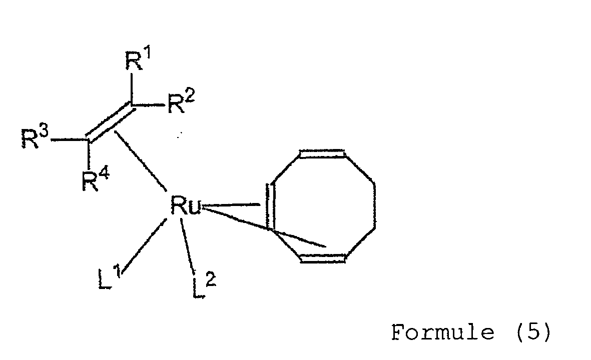 dans laquelle
R¹ à R⁴ sont choisis, indépendamment les uns des autres, dans l'ensemble contenant l'atome d'hydrogène (H) ; des groupes alkyle ; des groupes aryle ; des atomes d'halogène ; des groupes silyle ; des groupes siloxy ; CN ; CO₂R", R" étant à son tour choisi dans l'ensemble contenant l'atome d'hydrogène (H) et des groupes alkyle ; CHO et C(O)R"', R"' étant à son tour choisi dans l'ensemble contenant des groupes alkyle et aryle ; et
L¹ et L² sont choisis, indépendamment l'un de l'autre, parmi CO ; CNR"', R"' étant choisi à son tour dans l'ensemble contenant des groupes alkyle et aryle ; PR"'₃ et P(OR"')₃, R"' étant choisi à son tour dans l'ensemble contenant des groupes alkyle et aryle ; des ligands contenant des donneurs d'azote ; des ligands contenant des donneurs de soufre et des ligands contenant des donneurs d'oxygène; étant entendu que L¹ et L² peuvent en option également être liés l'un à l'autre et peuvent former un cycle.

7. Procédé selon la revendication 1, **caractérisé en ce que** le composé contenant du ruthénium présente la formule générale (6) 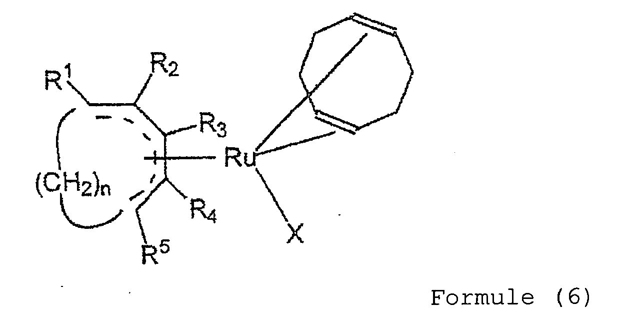 dans laquelle R¹ à R⁵ sont choisis, indépendamment les uns des autres, dans l'ensemble contenant l'atome d'hydrogène (H) ; des groupes alkyle ; des groupes aryle ; et
la ligne en pointillé dans la formule générale (6) représente une ou plusieurs doubles liaisons conjuguées ou non conjuguées ; et
n représente 0, 2 ou 3 ; et
X représente un ligand anionique monovalent quelconque.

8. Procédé selon la revendication 1, **caractérisé en ce que** le composé contenant du ruthénium présente la formule générale (7) 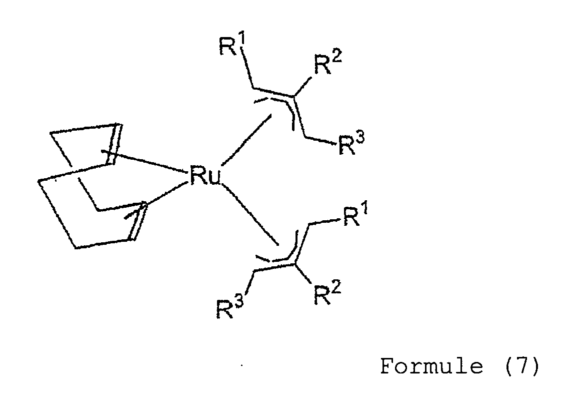 dans laquelle
R¹ à R³ sont choisis, indépendamment les une des autres, dans l'ensemble contenant l'atome d'hydrogène (H) et des groupes alkyle.

9. Procédé selon les revendications 1 à 8, pour la production d'élastomères silicone.

10. Procédé selon les revendications 1 à 8, pour la production de revêtements contenant des silicones.
